Europäisches Patentamt

European Patent Office

Office européen des brevets

(11) Publication number: **0 214 609 B1**

# EUROPEAN PATENT SPECIFICATION

(45) Date of publication of patent specification: **10.03.93**　(51) Int. Cl.⁵: **H04L 9/00**

(21) Application number: **86112177.0**

(22) Date of filing: **03.09.86**

(54) **Electronic transaction method and system.**

(30) Priority: **04.09.85 JP 193735/85**

(43) Date of publication of application:
**18.03.87 Bulletin 87/12**

(45) Publication of the grant of the patent:
**10.03.93 Bulletin 93/10**

(84) Designated Contracting States:
**DE FR GB**

(56) References cited:
**EP-A- 0 089 087**
**DE-A- 3 303 846**

**IBM TECHNICAL DISCLOSURE BULLETIN, vol. 20, no. 12, May 1978, pages 5245-5247, New York, US; S.M. MATYAS: "Digital signature for identifying message and sender"**

(73) Proprietor: **HITACHI, LTD.**
**6, Kanda Surugadai 4-chome**
**Chiyoda-ku, Tokyo 100(JP)**

(72) Inventor: **Takaragi, Kazuo**
**Fujigaokaryo 7-2, Umegaoka**
**Midori-ku Yokohama(JP)**
Inventor: **Sasaki, Ryoichi**
**326-7, Shimotsuchidana**
**Fujisawa-shi(JP)**
Inventor: **Shiraishi, Takayoshi**
**1-39, Deguchicho**
**Chigasaki-shi(JP)**
Inventor: **Kurashiki, Nobuhiro**
**6-8-304, Yokodai-5-chome Isogo-ku**
**Yokohama(JP)**

(74) Representative: **Strehl, Schübel-Hopf, Groening**
**Maximilianstrasse 54 Postfach 22 14 55**
**W-8000 München 22 (DE)**

EP 0 214 609 B1

**Description**

BACKGROUND OF THE INVENTION

The present invention relates to an electronic transaction and more particularly to an electronic transaction system which electronically effects commercial transactions by computer documents instead of conventional documents.

In the past, contracts are authenticated or validated by signatures or seals. Where data are transmitted through a communication like electronic transaction between two parties having interests to each other, even if the signature and seal data are converted to digital signals for transmission, they may be easily copied and hence they cannot be used for authenticity. Accordingly, the authenticity of the message by digital signature which corresponds to the normal signature and seal is required. In order for the message authenticity to be effective as formal transaction in place of the signature or seal, the following four conditions should be met.

(a) Only the transmitter can prepare a signed message such as a contract. It cannot be forged by a third person.

(b) The receiver cannot alter the signed message.

(c) The transmitter cannot later deny the fact of transmission.

(d) The receiver cannot later deny the fact of reception.

The following methods have been proposed to achieve the digital signature.

(1) Digital signature which uses conventional cryptograph

(2) Digital signature which uses public key cryptograph

(3) Digital signature by hybrid system

Characteristics and problems of those three methods are described below.

(1) Digital signature which uses conventional cryptograph

Many digital signature methods which use the DES (data encryption standard) system cryptograph have been proposed but notarization is required or the receiver can alter the signed message because the transmitting station and the receiving station have a common authenticity key. Accordingly, no practical signature system has been known.

(2) Digital signature which uses public key cryptograph

The digital signature can be relatively easily attained by using the public key cryptograph system represented by an RSA (Rivest-Shamir-Aldleman) algorithm.

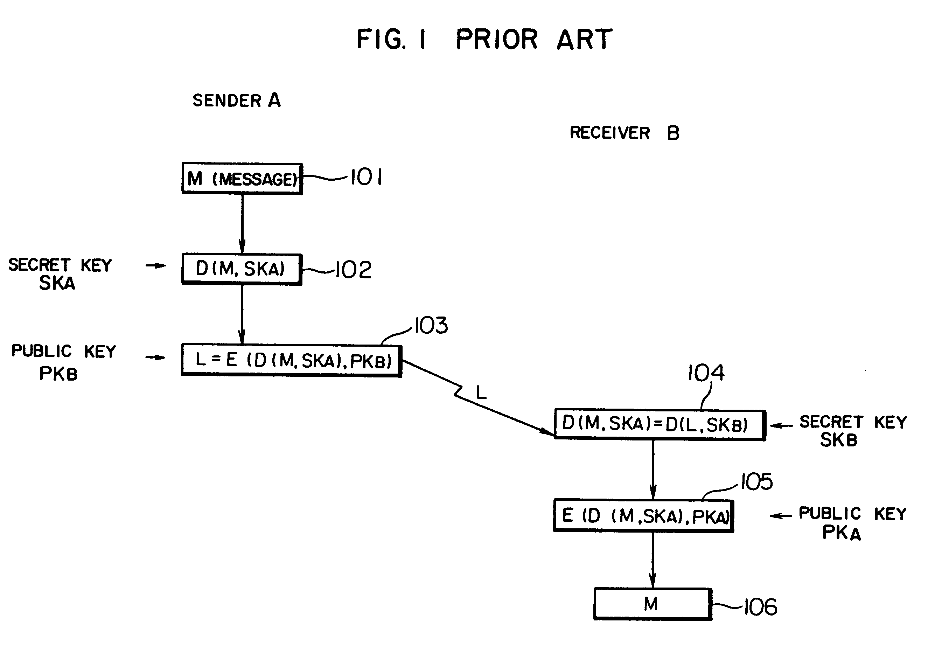

Fig. 1 shows a chart of a prior art digital signature by the public key cryptograph.

In a step 101, a message M from a sender A is inputted.

In a step 102, a decoded message $D(M, SK_A)$ is produced by decoding (deciphering) the message M by a secret key $SK_A$ of the sender A.

In a step 103, the decoded message $D(M, SK_A)$ is further encoded (enciphered) by a public key $PK_B$ of a receiver B to produce a cryptograph message $L = E(D(M, SK_A), PK_B)$, which is sent to the receiver B.

In a step 104, the data L is received by the receiver B is decoded by the secret key $SK_B$ of the receiver B to produce $D(M, SK_A)$.

In a step 105, the decoded message $D(M, SK_A)$ is endoded by the public key $PK_A$ of the sender A to produce the original message M.

In a step 106, the message M is supplied to the receiver B as an output data.

In the present flow chart, the cryptograph message M cannot be decoded in the step 104 unless the secret key $SK_B$ is known. Only the receiver B knows $SK_B$. In the step 102, only the sender A who knows the secret key $SK_A$ can produce $D(M, SK_A)$. Accordingly, it is assumed that it is A that has sent the message M and it is B that has received the message.

When the message M is not a conventional sentence but random data, it is difficult to determine whether M is proper or not. As an approach thereto, an identifier of the sender, and identifier of the receiver, a serial number of the message and a date may be sent together with the message. In this case, an unauthorized act such as copying the signed message for repetitive transmission is prevented.

However, in the RSA system, the encoding and decoding time is long because of complex operation and a time-consuming problem will arise when the message is long.

(3) Digital signature by hybrid system

This system utilizes the advantages of the DES cryptograph system and the RSA cryptograph system in a well-mixed manner.

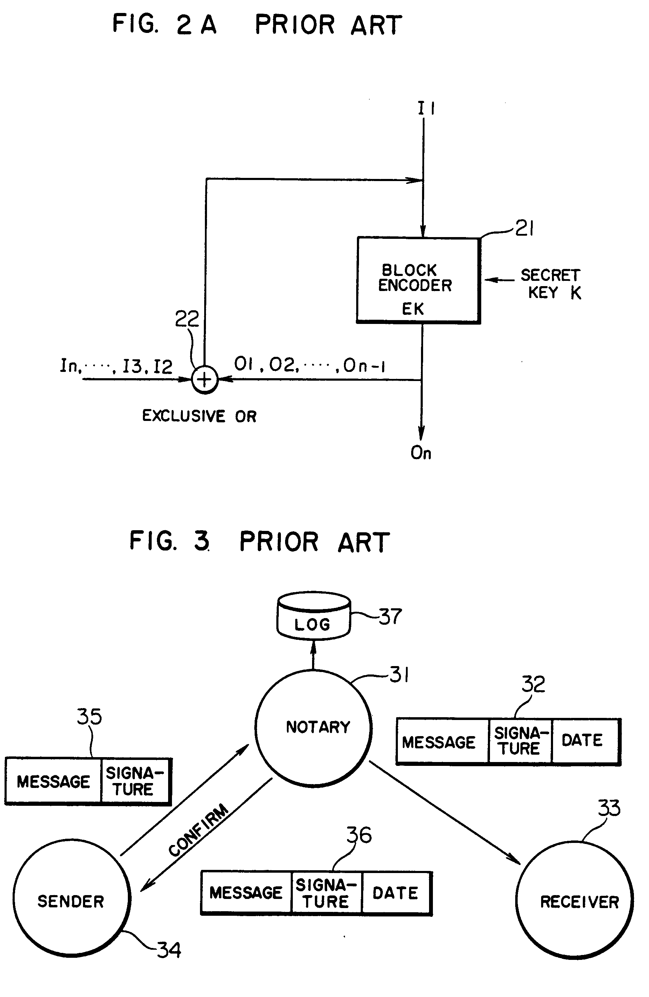

In this system, the conventional (ordinary) message is sent by the DES cryptograph communication and the transmission of the key and the authenticity utilize the RSA system. The message to be authenticated (validated) is first compression-decoded by the DES system to determine Hash Total. Fig. 2A shows a process therefor. In Fig. 2(A), the following steps are carried out.

Step 1:

First 64 bits of an input message I are defined as $I_1$. The $I_1$ is encoded by an encoder 21 by using a cryptograph key K. The encoded result is defined as $O_1$.

$$E_k (I_1) \rightarrow O_1$$

The 64 bits of an input message subsequent to first 64(i-1) bits are defined as $I_i$.

Step 2:

Next 64 bits of the input message which follow to $I_i$ are defined as $I_{i+1}$. An exclusive OR circuit 22 exclusively ORs $I_{i+1}$ and $O_i$ and an output thereof is encoded by the encoder 21 by using the key K.

$$E_k (I_{i+1} + O_i) \rightarrow O_{i+1}$$

Step 3:

If i < n-1, i is incremented by one and the process returns to the step 2. If not i < n-1, $O_{i+1} = O_n$ is outputted and the process is terminated. The RSA system digital signature is made only to the data having the finally produced cryptograph block (Hash total) $O_n$ and data information added thereto.

In this system, even the digital signature to the long message can be processed in a short time.

The above systems do not meet the above-mentioned condition (c) of the digital signature, that is, "the sender cannot later deny the fact of transmission". In the system which uses either the conventional cryptograph or the public key cryptograph, if the sender falsely insists that the secret key has been stolen and someone has prepared data without authorization, it is difficult to determine whether it is true or not.

If the secret key has been actually stolen, it turns out that all messages signed before are uncreditable. Accordingly, in the digital signature, there is a severe requirement that the secret key must be absolutely protected.

As described above, the condition (c) is not met so long as the signatures are made by only the two persons, the sender and the receiver.

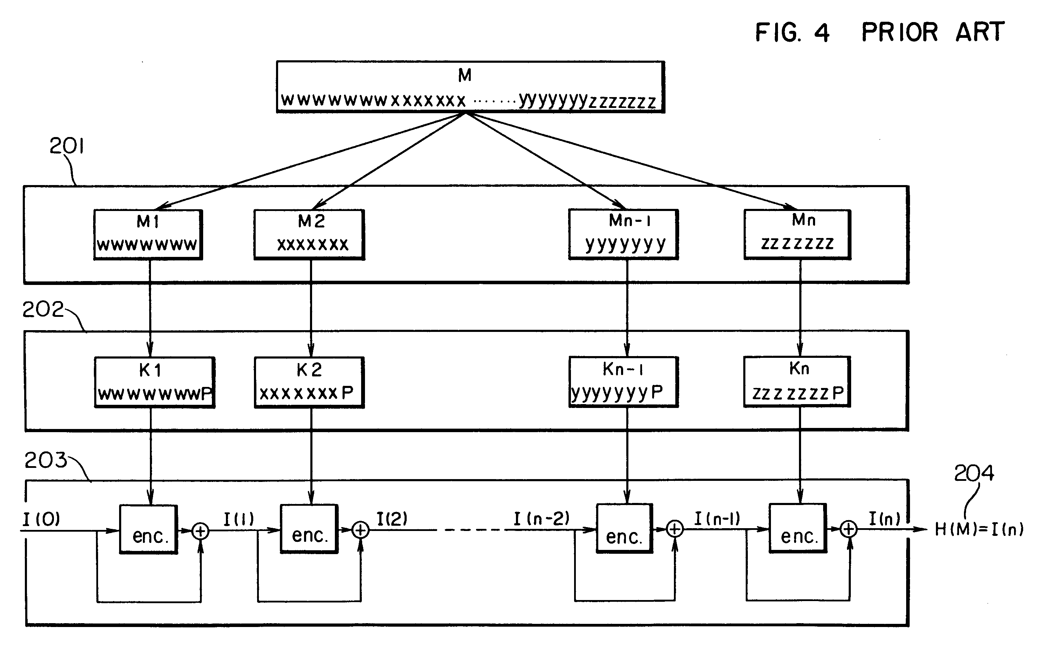

It has been proposed to meet the condition (c) by communicating through a reliable authentication (notary) organization. Fig. 3 illustrates a principle thereof.

In Fig. 3, a sender 34 sends a data consisting of message and signature to an authentication organization 31. The authentication organization 31 adds date information to the received data 35 to prepare data 32, which is sent to a receiver 33 and also recorded in a log 37. The sender 34 cannot later deny his message because the record is logged in the log 37 of the authentication organization 31. In this case, the sender may insist that the secret key has been stolen and someone has forged the message. Such insistence can be prevented by sending the same data 36 as the data 32 back to the sender 34 for confirmation.

Other problems are who the authentication organization should be and a large volume of message to be recorded.

A system bearing some features in common to Figure 3 is described in DE-A-33 03 846, which utilizes a security manager 8 which intervenes between the sending terminal 4 and the receiving terminal 6 to verify data to be sent between the terminals.

As a modification of (3), a method for determining a Hash total by data compression encoding by DES in the hybrid digital signature is explained with reference to Fig. 4.

In Fig. 4, the following steps are carried out.

Step 201:

An input message M is divided into n 56-bit blocks M1, M2, • • • Mn

M = M1, M2, • • • Mn

Step 202:

A parity bit is added to every seven bits of Mi (i = i, 2, • • • n) to produce Ki (i = 1, 2, • • • n).

Step 203:

The following step is repeated for j = 1, 2, • • • n.
I(j-1) is encoded by using Kj as a cryptograph key, and the encoded result and I(j-1) are exclusively ORed to produce I(j).

$$I(j) \leftarrow I(j-1) \oplus EKj (I(j-1))$$

where I(o) is an initial value.

Step 204:

$$H(M) = I(n)$$

Digital signature by the RSA system is made to the resulting cryptograph block compression encoded message H(M).

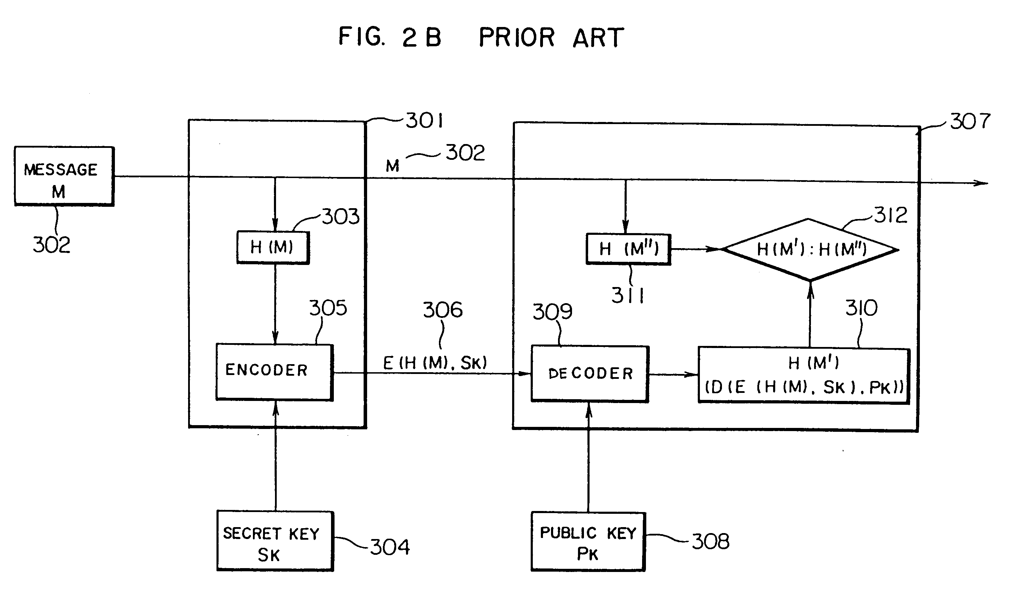

Referring to Fig. 2B, a method of digital signature by the hybrid system is explained.

A sender 301 calculates a short character string H(M) from a message M 302 by the data compression encoding, produces a digital signature E (H(M), $S_k$) 306 by an encoder 305 by using a secret key $S_k$ 304 and sends it to a receiver 307. In order for the receiver 307 to recognize that the message 302 and the digital signature 306 are true and valid, the receiver 307 decodes the digital signature E (H(M), $S_k$) 306 by a decoder 309 to produce the original character string H(M') 310, and calculates a character string H(M") 311 from the message 302 in the same manner as the sender 301 did. Both are compared by a comparator 312 and if they are equal, the message 302 is true and valid so long as the receiver believes that the sender 301 is a sole owner of the secret key $S_k$ 304.

In this method, the digital signature to a long message can be processed in a short time, but this method does not meet the condition (d) (the receiver cannot later deny the fact of reception). If the receiver later denies the fact of reception, the sender has no evidence to deny it.

SUMMARY OF THE INVENTION

It is an object of the present invention to provide an electronic transaction which eliminates the disadvantages in the digital signature encountered in the prior art system, realizes a function of an authentication organization, reduces the quantity of message to be recorded concerning such as the content of a contract and meets the following conditions.

(1) Only a sender can prepare a signed message. It cannot be forged by a third party.
(2) A receiver cannot alter the signed message.
(3) The sender and receiver cannot later deny the facts of transmission and reception, respectively.
In order to achieve the above object, one feature of the present invention includes the following steps.
① Sender and receiver are checked.
② Content certificate function is added.
③ The sender or receiver is double-checked by the possession of a secret key and a terminal response.
④ A time limit to an effective period for an electronic seal is set.
⑤ A grace period is added to the electronic seal.
⑥ A tally impression is sent from the receiver back to the sender.

4

BRIEF DESCRIPTION OF THE DRAWINGS

Fig. 1 is a flow chart of a prior art digital signature procedure which uses a public key cryptograph system,

Figs. 2A, 2B and 4 show principles of known data compression cryptograph,

Fig. 3 shows a prior art digital signature system which uses an authentication organization,

Fig. 5 shows a first system configuration of an electronic transaction system to which the present invention is applied,

Fig. 6 shows a flow chart of a procedure in a first embodiment of the present invention,

Fig. 7 shows a flow chart of a procedure in a second embodiment of the present invention,

Fig. 8 shows a flow chart of a procedure in a third embodiment of the present invention,

Fig. 9 shows a second system configuration of the electronic transaction system to which the present invention is applied,

Fig. 10 shows a flow chart of a procedure of a fourth embodiment of the present invention,

Fig. 11 shows a third system configuration of the electronic transaction system to which the present invention is applied, and

Fig. 12 shows a flow chart of a procedure in a fifth embodiment of the present invention.

DESCRIPTION OF THE PREFERRED EMBODIMENTS

In order to facilitate the understanding of the present invention, the contents of the above items ① ~ ⑥ are explained in detail.

① Confirmation of sender and receiver

In the following description, the sender of the transaction message is referred to as a signer and the receiver is referred to as a certifier.

Two sets of public key and secret key in the public key cryptograph system are prepared. They are (public key, secret key) : $(PK_S, SK_S)$ and $(PK_R, SK_R)$, where $SK_S$ is owned only by the signer and $SK_R$ is owned only by the certifier, and $PK_S$ and $PK_R$ are copied to all concerned.

Assuming that a message M consists of m binary bits, the following is met in the public key cryptograph system.

$$M = E\ (D(M,\ SK_S),\ PK_S)$$

$$= E\ (D(M,\ SK_R),\ PK_R) \qquad \ldots\ldots (1)$$

where $D (*, K)$ is a message decoded from a message * by a key K, and $E (*, K)$ is a cryptograph encoded from the message * by the key K. The same message is supplied to the signer and the certifier, who decode it by their own secret keys and the decoded results $D (M, SK_S)$ and $D (M, SK_R)$ are disclosed to the persons concerned, who encode $D (M, SK_S)$ and $D (M, SK_R)$ by using the signer's and certifier's public keys $PK_S$ and $PK_R$ which the persons concerned possess. The persons concerned can confirm that the formula (1) is met if the signer and the certifier properly used their secret keys. If the formula (1) is not met, the persons concerned may determine that the secret key of the signer or the certifier is not valid.

For example, if the signer forges the signed message by using a false secret key $SK_S'( \neq SK_S)$ ,

$E (D(M, SK_S')\ PK_S) \neq E (D(M, SK_S)\ ,\ PK_S)$
$E (D(M, SK_S')\ PK_S) \neq E (D(M, SK_R)\ ,\ PK_R) \qquad (2)$

Thus, the persons concerned may determine that the secret key used by the signer or the certifier is an unauthorized one.

It is very rare that the formula (1) is met in spite of the fact that the signer or the certifier forged the signed message by using the false secret key, because, assuming that the length of the message M is 200 bits, a probability that the formula (1) is met by the false secret key S is $1/2^{200} \fallingdotseq 6 \times 10^{-61}$, which is negligibly small.

It is difficult for a third person to steal the secret key of the signer or certifier and transact as if he were the signer or certifier, because the true signer and certifier, who are also the persons concerned, can detect a third person who transacts in place of the signer or certifier once the D (M, $SK_S$) or D (M, $SK_R$) is disclosed.

Where the key K for D (*, K) is kept in secret, it is difficult for a third person who is unaware of the secret key K to forge a key K' for the message M to meet D (M, K) = D (M, K').

The D (M, K) thus prepared is hereinafter referred to as an electronic seal by the owner of the secret key K, and the message M for certifying the validity or authenticity of the electronic seal is referred to as certificate data. If a person who received the electronic seal has a corresponding public key, he/she can detect who prepared the electronic seal and the content of the message. However, a person other than the owner of the secret key K cannot produce the electronic seal D (M, K) based on the certificate data M. The same certificate data is decoded by the signer and certifier by their respective secret keys and the decoded results D (M, $SK_S$) and D (M, $SK_S$) are exchanged between both. The certifier can confirm that the sender of D (M, $SK_S$) is the signer himself if the certifier can get M in accordance with the formula (1) by encoding D (M, $SK_S$) by the public key $PK_S$ of the signer. The signer can also confirm that the sender of D (M, $SK_R$) is the certifier himself if the signer can get M in accordance with the formula (1) by encoding D (M, $SK_R$) by the public key $PK_R$ of the certifier. When the persons concerned are presented with D (M, $SK_S$) and D (M, $SK_R$) from the signer or certifier, they encode D (M, $SK_S$) and D (M, $SK_R$) by using the public key $PK_S$ of the signer and the public key $PK_R$ of the certifier. The persons concerned can determine whether the secret key used is authorized or not by checking if the formula (1) is met or not.

② Addition of content certificate function

In order to certify the content of the transmitted data, a message I is data compression encoded (Fig. 2) by using the key K. High order m bits of the finally produced block $O_n$ is used as a Hash total (I, K) for the message I.

Assuming that m = 64 and different messages I and I' are data compression encoded, a probability of

$$C (I', K) = C (I, K) \qquad (3)$$

is $1/2^{64} \doteqdot 5 \times 10^{-20}$, which is almost null.

When the signer sends a message, he/she data-compression-encodes it and opens the Hash total (data compression encoded message) to the persons concerned. The signer and certifier keep the originals of the message. Thus, if an issue later occurs on the original, the original may be again data-compression-encoded to check whether it matches to the initial original.

The message I may be used as an encoding key in an encoding system for certifying the content. A predetermined input data I0 is encoded by the encoding key to produce a Hash total C (I0, I). In the present encoding system, it is difficult to determine the encoding key I from the input data I0 and the output data C (I0, I) which both have been received.

Assuming that the length of the output data is 64 bits and different messages I and I' are used as the encoding key, a probability of

$$C (I0, I') = C (I0, I) \qquad (4)$$

is $1/2^{64} \doteqdot 5 \times 10^{-20}$, which is almost null.

The C (I0, I) is inserted in the certificate data at a predetermined position so that C (I0, I) is reproduced from the certificate data. When the signer, certifier or person concerned gets the message I' and C (I0, I), he/she first encodes the data I0 by using the message I' as a key, and then compares the encoded result or Hash total C (I0, I') with C (I0, I). If they are equal, it means that the given message I' is equal to the original message I, and if they are not equal, it means that the given message I' is not equal to the original data I.

③ Double check of the signer and certifier by the possession of the secret key and the terminal response

The transaction procedure is established such that the signer and certifier respond to the call from the partner before they input their own secret keys. Thus, if the secret key is stolen by a third person, who intends to get involved in the electronic transaction, at least one call is made by the signer or certifier before the transaction is executed. Accordingly, the signer or certifier can detect the third person's involvement.

④ Addition of time limit of effective period of electronic seal

When the signer and certifier make their electronic seals and tally impressions, they add dates which indicate the effective period of the electronic seals and tally impressions. This indicates to the transaction partner who received the electronic seal and tally impression a due date to respond, and declares that the transaction will be terminated and the electronic seal and tally impression so far exchanged will become ineffective unless response is received by the due date. If the signer or certifier does not receive the response to the electronic seal and tally impression he/she sent, he/she informs it to the authentication organization together with the electronic seal and tally impression so that the electronic seal and tally impression are invalidated. Thus, if the signer or certifier intentionally attempts to delay the execution of the transaction by non-returning the response, the authentication organization authenticates that the electronic seal and tally impression so far exchanged are invalid and the transaction has been terminated. Accordingly, safety in the transaction procedure is assured.

⑤ Addition of grace period for electronic seal

When the signer or certifier prepares his/her electronic seal and tally impression, he/she adds a grace period date for the electronic seal and tally impression at a predetermined position on the certificate data. This means to indicate to the partner of transaction who received the electronic seal and tally impression a grace period during which the partner is permitted to terminate the transaction. Before or during the grace period, the partner can terminate the transaction and declare that the electronic seal and tally impression so far exchanged are invalid. Thus, if the signer or certifier finds any defect in the transaction or finds that the electronic seal or tally impression received from the partner is unauthorized one, after the signer or certifier has sent the electronic seal and tally impression, he/she informs it to the authentication organization together with the electronic seal and tally impression so that the electronic seal and tally impression are invalidated. Thus, if an invalid transaction is made or if an opposition is lodged to the received electronic seal or tally impression, the authentication organization will authenticate that the electronic seal and tally impression so far exchanged are invalid and the transaction has been terminated. Accordingly, safety in the transaction procedure is assured.

⑥ Transmission of tally impression from certifier to signer

When the certifier receives the message M from the signer and confirms the content of the message M and agrees to the transaction, he/she prepares Hash totals $h_1 = H_1 (M)$ and $h_2 = H_2 (M)$ for a predetermined data I0, and combines high order bit sequence $h_1$ with a time data T to produce a tally impression certificate data $(T, h_1)$. The tally impression certificate data is decoded by the secret key $SK_R$ of the certifier to prepare an electronic tally impression $D ((T, h_1), SK_R)$, which is sent to the signer as a response of agreement to the transaction by the message M. The signer encodes the electronic tally impression $(D ((T, h_1), SK_R)$ by the public key $PK_R$ of the certifier to produce the original tally impression certificate data $E (D((T, h_1), SK_R), PK_R) = (T, h_1)$. The signer confirms the fact that the high order bit sequence $h_1$ of the Hash total of the message M is included in the electronic seal which can be prepared only by the certifier, and the signer may use it as a counterevidence when the certifier later denies the fact of transaction and does not send back the electronic seal of the certifier and escapes with the electronic seal of the signer.

The present invention is now explained for specific embodiments.

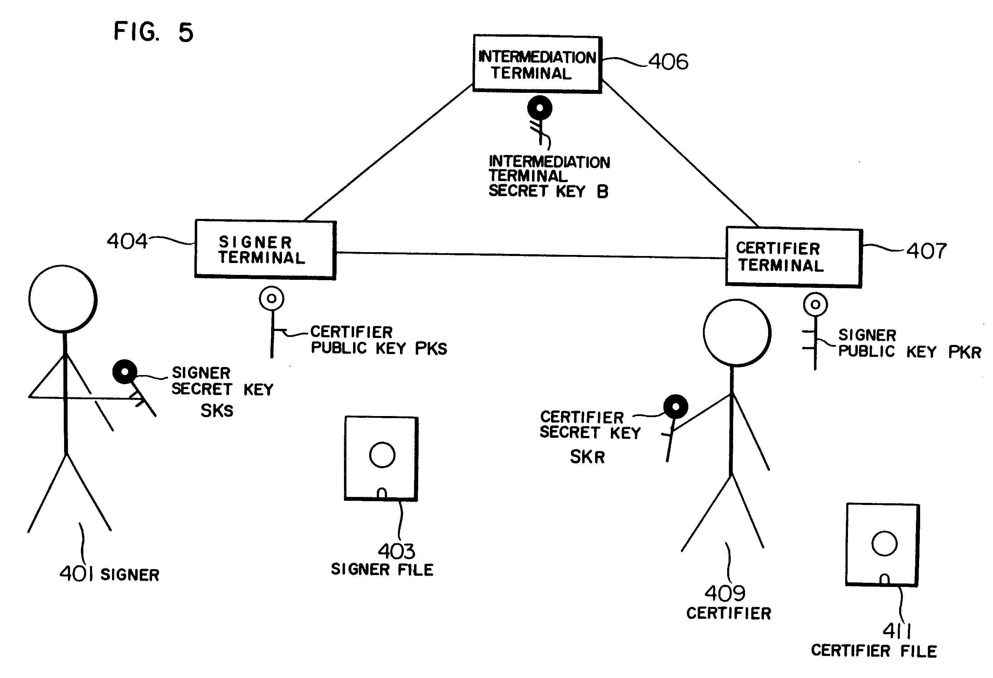

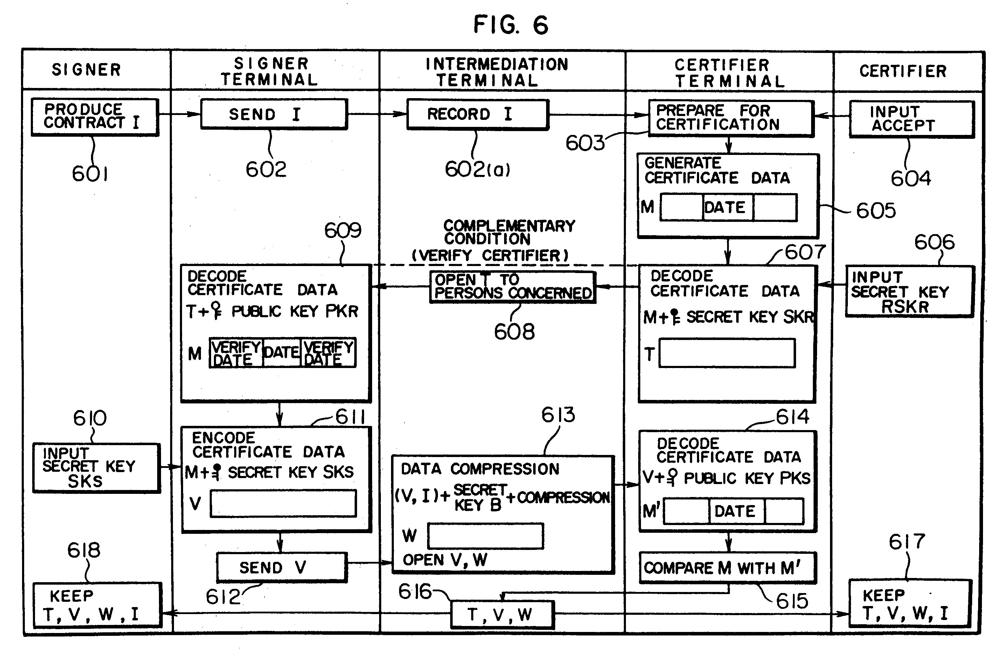

Fig. 5 shows a configuration of an electronic transaction system to which the present invention applies. Fig. 6 shows a flow chart of a procedure for embodying the present invention in the configuration of Fig. 5.

Where a creditability of journal management in an intermediation terminal 406 of Fig. 5 is high, the elements in Fig. 5 are operated in accordance with the flow chart shown in Fig. 6.

Step 601:

A signer 401 prepares a contract I by a signer terminal 404 and records it in the signer terminal 404. He/she also enters a name of the signer 401 and a name of a certifier 409 to the signer terminal 404.

Step 602:

The signer terminal 404 sends the contract I and the name of the signer 401 to a certifier terminal 407 via the intermediation terminal 406.

Step 602(a):

The intermediation terminal 406 records the transmitted contract I.

Step 603:

The certifier terminal 407 calls the certifier 409 and displays the contract I and the name of the signer 401.

Step 604:

The certifier 409 watches the display of the certifier terminal 407 to confirm the contract of the signer 401 and depress a certificate accept button.

Step 605:

The certifier terminal 407 prepares received date as a certificate data such as "14:35:14, February 19, 1985".

Step 606:

The certifier 409 inputs a certifier secret key $SK_R$.

Step 607:

The certifier terminal 407 prepares a certifier electronic seal $T = D(M, SK_R)$ by decoding the certificate data M by the secret key $SK_R$ of the certifier 409, and sends it to the signer 401 at the signer terminal 404 via the intermediation terminal 406.

Step 608:

When the intermediation terminal 406 receives T, it immediately opens it to persons concerned by transmitting it to the persons concerned, or printing it on publication.

Step 609:

When a signer terminal 404 receives T, it encodes it by the certifier public key $PK_R$ to reproduce the original certificate data.

$$M = E(D(M, SK_R), PK_R)$$

It checks the content of the certificate data and checks the following.
(1) If the time shown in the M is close to the reception time at the signer terminal 404, whether the true certifier 409 is actually present at the certifier terminal 407.
(2) If the time shown in the M is far from the reception time of the signer terminal 402 or makes no sense, it is judged that a false certifier is present at the certifier terminal 407.
In the present example, M is "14:35:14 February 19, 1985" and the decision (1) is made. If (2) is met, a message to terminate the transaction is sent to the certifier 409.

Step 610:

The signer 401 enters the signer secret key $SK_S$ to the signer terminal 404.

Step 611:

The signer terminal 404 decodes the certificate data by using the signer secret key $SK_S$ to the reproduced certificate data to prepare a signer electronic seal V.

$$V = D (M, SK_S)$$

Step 612:

The signer terminal 404 sends the V prepared in the step 611 to the certifier terminal 407 via the intermediation terminal 406.

Step 613:

The intermediation terminal 406 data-compression-encodes the set of V and I by using an intermediation terminal secret key B.

$$W = C (B, (V, I))$$

The contract I has been recorded in the intermediation terminal 406 in the step 602 (a). The V and W are opened to the persons concerned in the same manner as that in the step 608.

Step 614:

When the certifier terminal 407 receives the V, it encodes it by using the signer public key $PK_S$.

$$\mathbf{M' = E \ (V, \ PK_S)}$$
$$\mathbf{= E \ (D \ (M, \ SK_S), \ PK_S)}$$

Step 615:

The certifier terminal 407 checks if the encoded result M' in the step 614 matches to the certificate data M in the step 605.

(1) If M' matches to the certificate data prepared in the step 605, it is judged that the signer 401 himself/herself is actually present at the signer terminal 404 and a transaction accept signal is sent to the intermediation terminal 406.

(2) If M' does not match to the certificate data M prepared in the step 605, it is judged that a false signer is present at the signer terminal 404 and a transaction reject signal is sent to the intermediation terminal 406.

Step 616:

When the intermediation terminal 406 receives the transaction accept signal, it sends a signal of transaction agreement to the signer terminal 404 and certifier terminal 407 and records T, V and W. The contract I is deleted from the record.

When the intermediation terminal 406 receives the transaction reject signal, it sends a signal of transaction disagreement to the signer terminal 404 and certifier terminal 407, and deletes the records of T, V, W and I.

Step 617:

When the certifier terminal 407 receives the signal of transaction success, it records the contract I and the T, V, W in the file 411, and the certifier keeps the file 411.

Step 618:

When the signer terminal 404 receives the signal of transaction success, it records the contract I and the T, V, W in the file 403, and the signer 401 keeps the file 403.

Modification 1 of the first embodiment.

If the contract I is confidential information, the encoding of the contract by a conventional cryptograph may be added. A secret key X of the conventional cryptograph has been previously exchanged between the signer and the certifier, and the secret key X is also sent to the intermediation terminal 406. The steps 602, 602 (a) and 603 are modified as follows.

Step 602:

The signer terminal 404 prepares a cryptograph I' by encoding the contract I by using the secret key X of the conventional cryptograph. Then, the signer terminal 404 sends the cryptograph I' of the contract and the name of the signer 401 to the certifier terminal 407 via the intermediation terminal 406.

Step 602 (a):

The intermediation terminal 406 decodes the cryptograph I' of the contract by using the secret key X of the conventional cryptograph to prepare the original contract I. Then, the intermediation terminal 406 records the name of the signer 401, the name of the certifier 409 and the contact I.

Step 603:

The intermediation terminal 406 decodes the cryptograph I' of the contract by using the secret key X of the conventional cryptograph to prepare the original contract I. Then, the certifier terminal 407 calls the certifier 409 and displays the contract I and the name of the signer 401.

Modification 2 of the first embodiment

In the step 606 or 610 of the first embodiment, if the certifier secret key $SK_R$ or signer secret key $SK_S$ to be entered by the certifier or signer is long, a certain number of bits of the secret key may be recorded on a magnetic card and the remaining bits are memorized by the certifier 409 or signer 401 as a secret number. When the certifier 409 or signer 401 enters the secret key, he/she sets the magnetic card and enters the secret number, and the terminal synthesizes the secret key based on those input information.

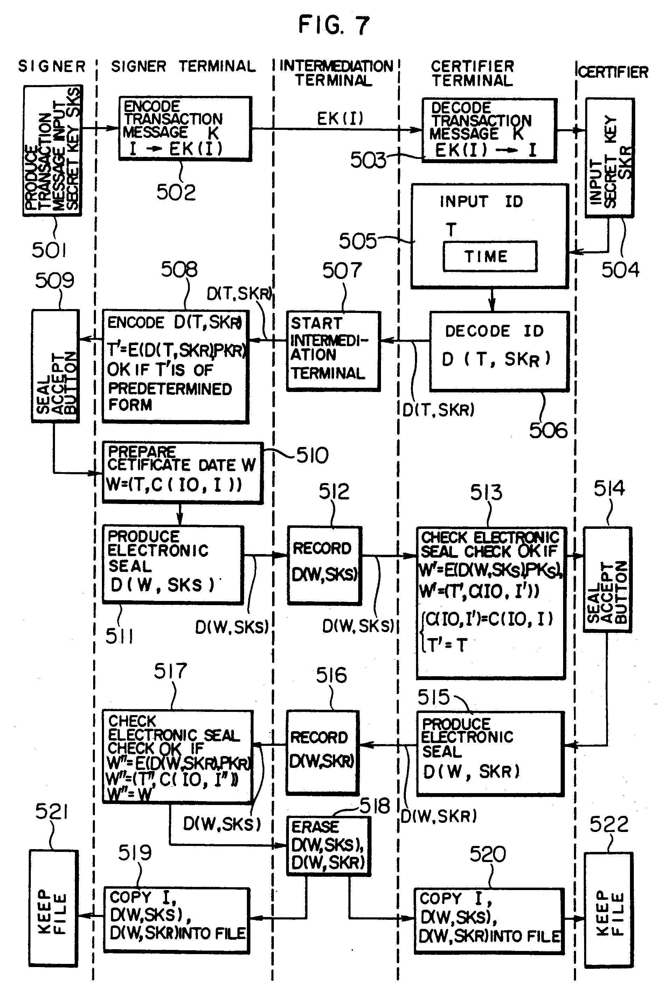

In a second embodiment, a high creditability is not put on the intermediation terminal 406 of Fig. 5 but the journal information is replaced by the electronic seal to eliminate the journal management. The operations of the elements in Fig. 5 are explained with reference to a flow chart of Fig. 7.

Step 501:

The signer 401 enters a transaction message I to the signer terminal 404 and enters the secret key $SK_S$ of himself/herself, the name of the signer 401 and the name of the certifier 409.

Step 502:

The signer terminal 404 prepares $E_k(I)$ by encoding the transaction message I by using the cryptograph key k, and sends $E_k(I)$, the name of the signer 401 and the name of the certifier 409 to the certifier terminal 407.

Step 503:

The certifier terminal 407 decodes the transaction message I by using the cryptograph key k.

$I = D_k (E_k(I))$

10

and it displays the transaction message I on a screen of the certifier terminal 407.

Step 504:

The certifier watches the transaction message I displayed on the display screen of the certifier terminal 407, and if he/she judges that he may proceed with the transaction, he/she enters his/her secret key $SK_R$.

Step 505:

The certifier terminal 407 prepare data T of a predetermined format. For example, the data T represents a current time such as "15:32:12 April 11, 1985".

Step 506:

The data T is decoded by using the secret key $SK_R$ in a predetermined public key cryptograph system to prepare D $(T, SK_R)$, which is sent to the signer terminal 404 via the intermediation terminal 406.

Step 507:

The intermediation terminal 406 starts its operation in response to the reception of D $(T, SK_R)$.

Step 508:

The signer terminal 404 encodes D $(T, SK_R)$ by using the certifier public key $PK_R$ to prepare $T' = E$ (D-$(T, SK_R), PK_R)$. If T' matches to the predetermined format, it is judged that the certifier 409 himself/herself is actually present at the certifier terminal 407. In the present example, since the content of T' is same as that of T, that is, "15:53:12 April 11, 1985", the above judgement is made.

Step 509:

The signer 401 knows that the certifier 409 himself/herself is present at the certifier terminal 407 and the certifier 409 has judged to accept the transaction of the transaction message I. The signer 401 depresses the seal accept button of the signer terminal 404 in order to prepare his/her electronic seal.

Step 510:

The signer terminal 404 prepares the following cryptograph data C $(I0, I)$ by using the transaction message I as the cryptograph key.
(1) $Cl_i$ $(I0)$ is a j-bit length output data derived by encoding a j-bit length input data I0 by an m-bit length cryptograph key $l_i$. The cryptograph system has been predetermined. In this cryptograph system, it is difficult to determine the cryptograph key $l_i$ based on the input data I0 and the output data $IC_i$ $(I0)$.
(2) The transaction message is sectioned into n m-bit blocks $l_1, l_2, \ldots l_n$. If the length of the last block $l_n$ does not reach m bits, "I" bits are added to attain the m-bit block $l_n$.
(3) The input data I0 is encoded by the Key $l_1$ to produce $O_1$.

$Cl_1$ $(I) \rightarrow OI$
$i = 1$

(4) $O_i$ is encoded by the key $l_{i+1}$ to produce $O_{i+1}$.

$Cl_{i+1}$ $(O_i) \rightarrow OI_{i+1}$

(5) $i+1 \rightarrow i$. If $i \leq n-1$, the process returns to (4). Otherwise, $O_{i+1} = O_n$ is outputted.
The encoded message $O_n$ is called a Hash total of the transaction message I and expressed by C $(I0, I)$.

C $(I0, I) = O_n$

T and C (I0, I) are combined to prepare

$$W = (T, C(I0, I))$$

Step 511:

W is decoded by the public key cryptograph system by using the secret key $SK_S$ to prepare the electronic seal D (W, $SK_S$), which is sent to the certifier terminal 407 via the intermediation terminal 406.

Step 512:

The intermediation terminal 406 records D (W, $SK_S$).

Step 513:

The certifier terminal 407 encodes D (W, $SK_S$) by the signer public key $PK_S$ to prepare W'.

$$W' = E (D(W, SK_S) , PK_S)$$

It also prepares a Hash total C (IO, I) to the transaction message I in the same manner as the step 510.
If T' = T and C (IO, I') = C (IO, I) when W' = (T', C(IO, I')), "T' = T and C (IO, I') = C(IO, I)" is displayed on the screen.

Step 514:

The certifier 409 watches "T' = T and C (IO, I') = C (IO, I)" displayed on the certifier terminal 407 to judge that D (W, $SK_S$) was prepared by the signer 401 himself/herself based on the transaction message I, and decides to prepare and send the electronic seal of the certifier 409 himself/herself. He/she depresses an electronic seal prepare/send button of the certifier terminal 407.

Step 515:

The certifier terminal 407 decodes W by the public key cryptograph system by using the certifier secret key $SK_R$ to prepare the electronic seal D (W, $SK_R$). It sends D (W, $SK_R$) to the intermediation terminal 406 and the signer terminal 404.

Step 516:

The intermediation terminal 406 records D (W, $SK_R$).

Step 517:

The signer terminal 404 encodes D (W, $SK_R$) by the public key cryptograph system by using the certifier public key $PK_R$ to prepare W".

$$W" = E (D(W, SK_R), PK_R)$$

If W' = W, it is judged that D (W, $SK_R$) was prepared by the certifier 407 himself/herself based on the transaction I, and the signer terminal 404 sends a signal "acknowledged" to the intermediation terminal 406.

Step 518:

When the intermediation terminal 406 receives the "acknowledged" signal from the signer terminal 404, it erases the recorded D (W, $SK_S$) and D (W, $SK_R$) and terminates the operation.

Step 519:

The signer terminal 404 records the transaction message I, electronic seal D (W, $SK_S$) of the signer 401 and electronic seal D (W, $SK_R$) of the certifier 409 in the signer file 403, and terminates the operation.

Step 520:

The certifier terminal 407 records the transaction message I, electronic seal D (W, $SK_S$) of the signer 401 and electronic seal D (W, $SK_R$) of the certifier 409 in the certifier file 411, and terminates the operation.

Step 521:

The signer 401 keeps the signer file 403.

Step 522:

The certifier 409 keeps the certifier file 411.

Modification 1 of second embodiment

In the step 518 of the second embodiment, the intermediation terminal 406 may record the electronic seals D (W, $SK_S$) and D (W, $SK_R$) instead of erasing them to keep them as an evidence of transaction.

Modification 2 of second embodiment

In the steps 501 and 504 of the second embodiment, a portion of information on the secret key may be recorded in a magnetic card or IC card and the signal/certifier memorizes the rest of the information on the secret key as a secret number. When the secret key $SK_R$ is to be entered, the secret key is synthesized from the readout of the information from the magnetic card or IC card and the key entry of the secret number.

Modification 3 of second embodiment

In the step 501, 504, 509 or 514 of the second embodiment, a checking function of the person by voice pattern or fingerprint before input operation may be added to the terminal.

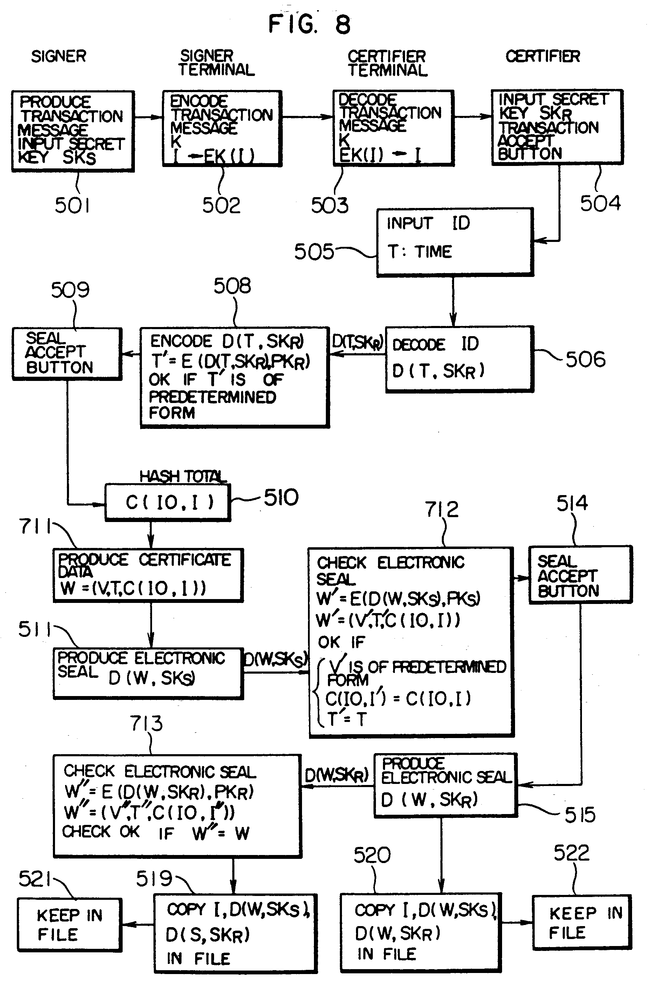

Fig. 8 shows a flow chart of a procedure for transacting by an electronic seal with a time limit for an effective period in accordance with a third embodiment of the configuration shown in Fig. 5.

Steps 711 - 713 which are different from the flow chart of Fig. 7 are primarily explained.

Step 711:

The signer terminal 404 prepares the time limit of the effective period of the electronic seal in a predetermined data format to set the time limit V. For example, the time limit V is "17:30:00 April 11, 1985".

The previously prepared T and C (IO, I) and the V are combined to prepare

$$W = (V, T, C (IO, I))$$

Step 511:

W is decoded by the public key cryptograph system by using the secret key $SK_S$ to prepare D (W, $SK_S$), which is sent to the certifier terminal 407.

Step 712:

The certifier terminal 407 encodes D (W, $SK_S$) by the signer public key $SK_R$ 408 to prepare W'.

$$W' = E (D(W, SK_S), SK_R)$$

13

It also prepares a Hash total C (IO, I) for the transaction message I in the same manner as the step 510.

If T' = T and C (IO, I') = C (IO, I) and V' is of a predetermined format when W' = (V', T', C (IO, I')), then "T' = T and C (IO, I') = C (IO, I)" and "Time limit of electronic seal = V' " are displayed on the screen. In the present example, the content of V' is same as that of V, that is, "15:30:00 April 11, 1985".

Step 713:

The certifier 409 watches "T' = T and C (IO, I') = C (IO, I)" and "Time limit of electronic seal = V' " displayed on the certifier terminal 407 and judges that D (W, $SK_S$) was prepared by the signer 401 himself/hersel based on the transaction message I and the time limit is V', and decides to prepare and send the electronic seal of the certifier. He/she then depresses the electronic seal prepare/send button of the certifier terminal 407.

In the third embodiment, the second and third modifications of the second embodiment equally apply.

In accordance with the above first and second embodiments, the electronic transaction which meets the following conditions is provided.

[I] Advantages concerning the first embodiment

(1) Only the sender can prepare the signed message. It cannot be forged by a third person.

This is because the encoded message V of the certificate data can be prepared only by using the secret key $SK_S$ which is owned only by the signer. If the third person attempts to transact with V' other than V of the certificate data, the certifier can detect in the step 614 that the signer is a false one, and the persons concerned who have the public key $PK_S$ can detect that the transaction is not effective because the encoded results of T and V publicized by the intermediation terminal, by using the public key $PK_S$ of the certifier and signer do not match each other.

(2) The receiver cannot modify the signed message.

The set of the encoded message V of the certificate data and the contact message I is data-compression-encoded by the secret key B of the intermediation terminal and the resulting Hash total W is recorded and opened to the persons concerned. Accordingly, if one of the parties who has the encoded message V of the certificate data and the contract message I brings the data and encodes the contract message by the certifier public key $PK_R$ in font of the other party, and causes the intermediation terminal to data-compression-encode the set of the encoded message and V to produce W', and W' is compared with the previously opened result W, then the content certification is attained. If W = W', the contents are identical and if W = W', the contents are not identical.

Because the encoded messages T and V of the certificate data are opened to the persons concerned during the transaction, the persons concerned can check who are now transacting. Accordingly, it is hard to a third person who has stolen the secret key to conduct an unauthorized transaction as if he were the sender or receiver.

(3) The sender and receiver cannot later deny the fact of transmission and reception.

In order for the electronic transaction to be effective, the party must enter its secret key at least once and responds to the call from the other party. That is, the party is double-checked. When the party responds to the call in the terminal, the person may be checked by the fact that he/she has the magnetic card as shown in the modification 2 of the embodiment, or the person may be checked by the voice pattern or fingerprint so that the personal check function is further enhanced.

Since the encoded messages T and V of the certificate data are opened to the persons concerned during the transaction, the persons concerned can check who are now transacting. Accordingly, it is hard for a third person who has stolen the secret key to conduct an unauthorized transaction as if he/she were sender or receiver because it may be detected by the true sender or receiver or the persons concerned.

The Hash total W for assuring the content of the contract message I is once opened and then recorded and kept in the intermediation terminal. It is therefore difficult to deny the fact of transmission or reception by modifying or destroying the record.

In the present system, the content of communication is not disclosed when the data is opened at the intermediation terminal. What is opened at the intermediation terminal is not the communication text itself but the Hash total which is prepared by data-compression-encoding the set of the communication text and the encoded message of the certificate data. It is impossible to estimate the communication text based on the Hash total.

Since the data which the intermediation terminal records and keep are the certificate data T and V and the Hash total W, the load for maintenance is lower than that when the entire contract message I is maintained.

[II] Advantages concerning the second embodiment

(1) The third person cannot conduct transaction as if he/she were the signer by the following reasons.

(a) Check of possession of secret key.

The electronic seal D (W, $SK_S$) can be prepared only by using the secret key $SK_S$ which only the signer possesses. If the third person prepares the electronic seal D (W, $SK_S'$) by the key $SK_S'$ other than the secret key $SK_S$, the certifier terminal detects that it is a false electronic seal in the step 513.

It is difficult for the third person to conduct the transaction unless he/she knows the secret key of the signer.

(b) Check by response to call

The third person who attempt to conduct an unauthorized transaction must depress the seal accept button in the step 509. The certifier depresses the transaction accept button in the step 504 and the call is made to the signer in the step 508. Accordingly, it is hard for the third person to conduct the transaction unless he/she prevents the signer from responding to the call.

(2) Third person cannot conduct unauthorized transaction as if he/she were certifier by the following reasons.

(a) Check by the possession of secret key

The electronic seal D (W, $SK_R$) can be prepared only by using the secret key $SK_R$ which is possessed only by the receiver. If the third person prepares the electronic seal D (W, $SK_R$) by the key $SK_R'$ other than the secret key $SK_R$, the signer terminal detects that it is a false electronic key in the step 517. The same is true for the decoded message D (T, $SK_R$) of the ID. A false message D (T, $SK_R'$) is detected in the step 508. Accordingly, it is hard for the third person to conduct the transaction unless he/she knows the secret key of the third person.

(b) Check by response to call

The third person who attempts to conduct the unauthorized transaction must depress the transaction accept button and the seal accept button in the steps 504 and 514. The call to the signer is first made, and then the call to the certifier is made in the certifier terminal. Accordingly, it is hard for the third person to conduct the transaction unless he/she prevents the certifier from responding to the call.

(3) Certifier cannot modify the transaction message by the following reasons.

(a) Check by possession of secret key

Let us assume that the certifier prepared a forged message I' of the transaction message I. In this case, the certifier cannot prepare the electronic seal D (W', $SK_S$) which the signer should have prepared.

$$W' = (T, C (IO, I))$$

Since the certifier is unaware of the secret key $SK_S$ of the signer, he/she cannot prepare D (W', $SK_S$) when W' is given. Let us assume that the certifier has prepared D (W', $SK_S$) by using the key $SK_S$ having a bit length of 200 bits. A probability that

$$D (W', SK_S') = D (W, SK_S)$$

is $1/2^{200}$ $6 \times 10^{-61}$, which is practically null. If a third person in a fair position calculates E (D(W', $SK_S$), $PK_S$) and E (D(W', $SK_R$), $PK_R$) for the certifier data I', and D (W', $SK_S'$) and D (W', $SK_R$), those do not match. It is thus seen that one of the electronic seals is false and the data set of the certifier is invalid. If $SK_S'$ is the true secret key,

$$W' = E (D(W', SK_S'), PK_S)$$

$$= E (D(W', SK_R), PK_R)$$

should be met. Accordingly, it is hard for the third person to modify the contract message unless he/she is aware of the secret key of the signer.

(b) Check by response to call

In the modification 1 of the embodiment, the evidences of the electronic seals D (W, SK$_S$) and D (W, SK$_R$) must have been left in the step 518. The certifier who attempts to modify the transaction message must prepare the response to the call by the signer in the step 509 in order to leave the record. Accordingly, even if the certigier could know the secret key SK$_S$ of the signer, it is difficult for the certifier to modify the transaction message unless the certifier can issue the response in the step 509 without being noticed by the signer.

(4) Signer cannot deny the content of transaction after transaction has been executed.

This is by the same reason as that for (3) in which the certifier cannot modify the transaction message.

In the present system, the content of communication is not disclosed in the intermediation terminal. The information transmitted to the intermediation terminal is not the communication text itself but the Hash total derived by data-compression-encoding the communication text, and it is impossible to guess the original communication text from the Hash total.

(5) Certifier cannot escape with electronic seal of signer

(a) Check by time limit of electronic seal

The electronic seal D (W, SK$_S$) of the signer includes the time limit V for the electronic seal which the signer has prepared in the predetermined form.

$$W = (V, T, C (IO, I))$$

If the response from the certifier is not received before the time limit V, the signer judges that the certifier has no intention to conduct the transaction and invalidates the electronic seal D (W, SK$_S$) by informing the electronic seal to the authentication organization. As a result, it is impossible for the certifier to escape with the electronic seal and make unauthorized use thereof. The authenication organization has a function to assure the invalidation of the electronic seal and it is utilized only when the necessity to prove the invalidity of the electronic seal arises.

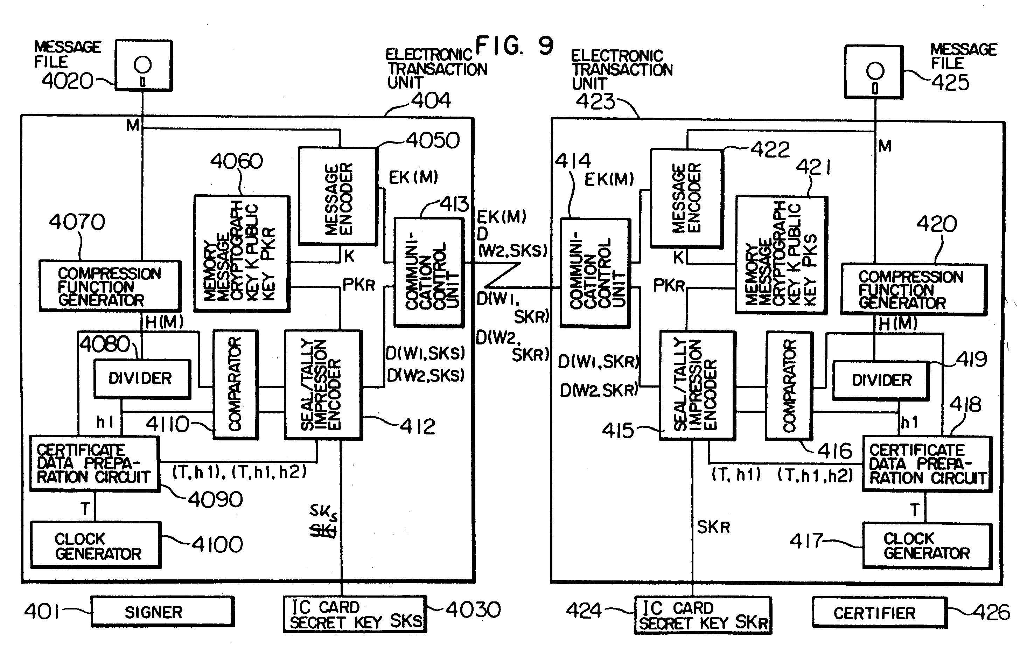

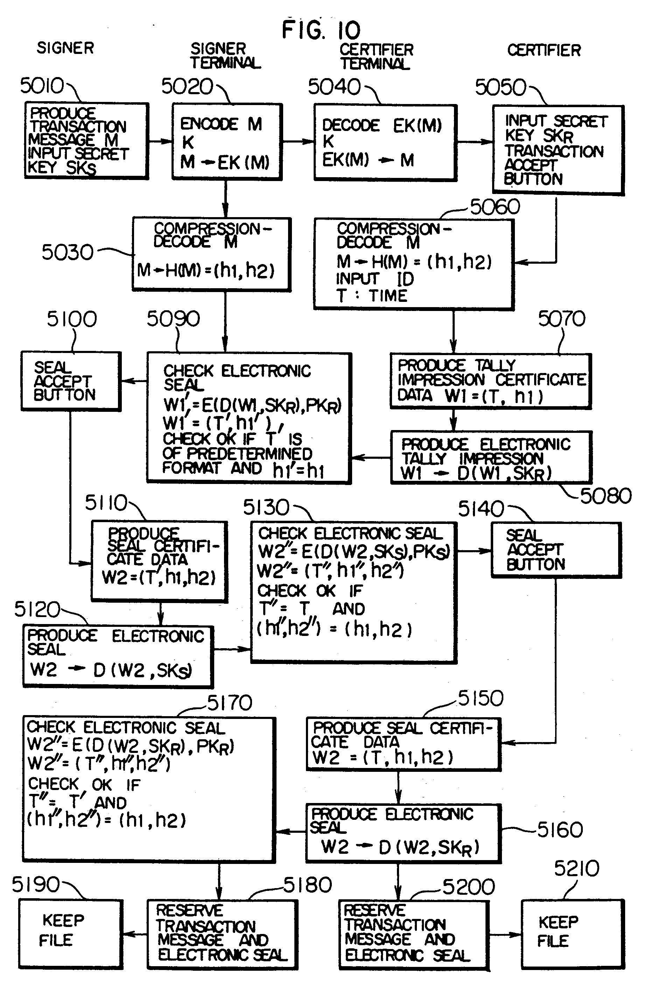

Fig. 9 shows another configuration of the electronic transaction system to which the present invention is applied, and Fig. 10 shows a flow chart of a procedure in a fourth embodiment of the present invention in the configuration of Fig. 9.

The operations of the elements of Fig. 9 are explained with reference to the flow chart of Fig. 10.

Step 5010:

The signer 401 enters the transaction message M from a message file 4020 to a signer electronic transaction unit 404, and enters his/her secret key SK$_S$, the name of signer 401 and the name of the certifier 426 by an IC card 4030.

Step 5020:

The signer electronic transmission unit 404 encodes the transaction message M by using the message cryptograph key K of a message encoder 4050 and a memory 4060 to prepare EK(M), and sends EK(M), the name of the signer 401 and the name of the certifier 426 to the certifier electronic transaction unit 423 through a communication control unit 413.

Step 5030:

The signer electronic transaction unit 404 prepares a compressed cryptograph H(M) by a compression function generator 4070 by using the transaction message M as a cryptograph key.

(1) H(M) is in 8-bit output data derived by compression-encoding an 8-bit input data I(O) by an 8-bit cryptograph key K1. The cryptograph system has been predetermined. In this cryptograph system, it is difficult to determine the cryptograph key K1 based on the input data I(O) and the output data H(M).

(2) The transaction message is sectioned into n 56-bit blocks M1, M2, • • • Mn. If the length of the last block Mn does not reach 56 bits, bits "0" are added until the length of the block Mn reaches 56 bits.

(3) One parity bit is added to every seven bits of the blocks so that the block length is expanded to 64 bits. The expanded blocks are designated by K1, K2, • • • Kn.

16

(4) The input data I(i-1) is encoded by the key Ki, and the encoded result is exclusively ORed with I(i-1) to produce I(i).

$$I(i) = I(i-1) + EKi (I(i-1))$$

The above process is repeated for i = 1, 2, • • • n. The initial value I(0) is a predeterminer one.
(5) The finally determined I(n) in the step (4) is used as H(M), which is divided into high order and low order data h1 and h2.

$$H(M) = (h1, h2) = I(n)$$

Step 5040:

The certifier electronic transaction unit 423 decodes the encoded message EK(M) by using the message encoder 422 and the cryptograph key K.

$$M = DK (EK(M))$$

It informs the transaction message M to the certifier 426.

Step 5050:

The certifier 426 watches the transaction message M decoded in the step 5040, and if he/she judges that the transaction may be proceeded, he/she enters his/her secret key $SK_R$ by the IC card 424.

Step 5060:

The certifier electronic transaction unit 423 compression-encodes the transaction message M by using the compression encoder 420 in the same manner as the step 5030 to prepare H(M) = (h1, h2). It also prepares a data in a predetermined format as an ID T by a clock generator 417. In the present example, the ID T may be a current time, for example, "15:53:12 April 11, 1985".

Step 5070:

A tally impression certificate data W1 is prepared by a certificate data preparation circuit 418 from the ID T and the high order data h1 derived from the encoded data H(M) by a divider 419.

$$W1 = (T, h1)$$

Step 5080:

The tally impression certificate data W1 is decoded by the seal/tally impression encoder 415 by using the secret key $SK_R$ by the predetermined public key cryptograph system to prepare D (W1, $SK_R$), which is sent to the signer electronic transaction unit 404.

Step 5090:

The signer electronic transaction unit 404 encodes D (W1, $SK_R$) by the seal/tally impression encoder 412 by using the certifier public key $PK_R$ of the memory 4060 to prepare W1' = (E (D(W1, $SK_R$), $PK_R$). The encoded result W1' is compared by the comparator 4110. If T' matches to the predetermined format and h1' is equal to h1 prepared in the step 5030, it is judged that the certifier 426 himself/herself is present at the certifier electronic transaction unit 423. In the present example, the content of T' is equal to that of T, that is, "15:53:12 April 11, 1985" and the above judgement is made.

Step 5100:

The signer 401 notifies that the certifier 426 hinself/herself is at the certifier electronic transaction unit 423 and the certifier 426 has decided to accept the transaction for the transaction message M. The signer 401 depresses the seal accept button of the signer electronic transaction unit 404 to prepare his/her electronic seal.

Step 5110:

The signer electronic transaction unit 404 enters (h1, h2) prepared in the step 5030 and T' prepared in the step 5090 to the certificate data preparation circuit 4090 to prepare the tally certificate data W2.

W2 = (T', h1, h2)

Step 5120:

The tally impression certificate data W2 is decoded by the seal/tally impression encoder 412 by using the secret key $SK_S$ by the predetermined public key cryptograph system to prepare D (W2, $SK_S$), which is sent to the certifier electronic transaction unit 423.

Step 5130:

The certifier electronic transaction unit 423 encodes D (W2, $SK_S$) by the seal/tally impression encoder 415 by the signer public key $PK_S$ of the memory 421 to prepare W2".

W2" = E (D(W2, $SK_S$), $PK_S$)

The comparator 4160 checks if T" = T and (h1", h2") = (h1, h2) when W2" = (T", h1", h2"), and informs the result to the certifier 426.

Step 5140:

When the certifier 426 confirms that the result in the step 5130 is "T" = T and (h1", h2") = (h1, h2)", he/she judges that D (W2, $SK_S$) has been prepared by the signer himself/herself based on the transaction message M, and decides to prepare and send the electronic seal of the signer. He/she depresses the electronic seal prepare/send button of the certifier electronic transaction unit 423.

Step 5150:

The certifier electronic transaction unit 423 prepares the seal certificate data W2 by the certificate data preparation circuit 418 from (h1, h2) and T prepared in the step 5060.

Step 5160:

The certifier electronic transaction unit 423 decodes W2 by the seal/tally impression encoder 415 by using the certifier secret key $SK_R$ of the IC card 424 by the public key cryptograph system to prepare D (W2, $SK_R$), which is sent to the signer electronic transaction unit 404.

Step 5170:

The signer electronic transaction unit 404 encodes D (W2, $SK_R$) by the seal/tally impression encoder 412 by using the certifier public key $PK_R$ of the memory 4060 by the public key cryptograph system to prepare W".

W2" = E (D(W2, $SK_R$), $PK_R$)

If the comparator 411 indicated that T" = T' and (h1", h2") = (h1, h2) when W2" = (T", h1", h2"), it is judged that D (W2, $SK_R$) has been prepared by the certifier 426 himself/herself based on the transaction message M.

18

Step 5180:

The certifier electronic transaction unit 404 records the transaction message M, the electronic seal D $(W2, SK_R)$ of the signer 401 and the electronic seal D $(W2, SK_S)$ and tally impression D $(W2, SK_R)$ of the certifier 426 in the message file 4020, and terminates the operation.

Step 5190:

The signer 401 keeps the message file 4020.

Step 5200:

The certifier electronic transaction unit 423 records the transaction message M, the electronic seal D $(W2, SK_S)$ of the signer 401 and the electronic seal D $(W2, SK_R)$ and tally impression D $(W2, SK_R)$ of the certifier 426 in the message file 425, and terminates the operation.

Step 5210:

The certifier 426 keeps the message file 425.

Modification 1 of the embodiment

In the steps 5010 and 5050 of the present embodiment, a portion of the information on the secret key is recorded in a magnetic card or IC card and the rest of the information of the secret key is memorized by the signer or certifier as a secret number. When the secret key $SK_S$ or $SK_R$ is to be entered, it is inputted by reading the information from the magnetic card or IC card and keying the secret number by the secret key $SK_S$ or $SK_R$.

Modification 2 of the embodiment

In the step 5010, 5050, 5100 or 5140 of the present embodiment, the terminal may confirm the person by the voice pattern or fingerprint before the signer or certifier enter the information.

In the present modification, the signer or certifier cannot escape with the electronic seal because of the tally impression check. If the certifier does not send the certifier's electronic seal D $(W2, SK_R)$ and denies the transaction after the signer has sent the signer's electronic seal D $(W2, SK_R)$ when the signer and the certifier electronically transact the transaction message M, the signer may prove that the certifier attempts to deny the fact of transaction and escape with the signer's electronic seal by decoding the tally impression by the public key $PK_R$ of the certifier and checking the content thereof. The tally impression D $(W1, SK_R)$ sent by the certifier to the signer prior to the exchange of the electronic seal includes the high order data h1 of H(M) = (h1, h2) prepared by compression-encoding the transaction message M sent by the signer.

$$W1 = (T, h1)$$

It is difficult to prepare the secret key which meets

$$D (W1, SK_R') = D (W1, SK_R)$$

by the same reason as the third person cannot conduct the transaction as if he/she were the certifier. Accordingly, it is only the certifier who has the secret key $SK_R$ that can prepare the tally impression which includes the high order data of the compression-encoded message of the transaction message M.

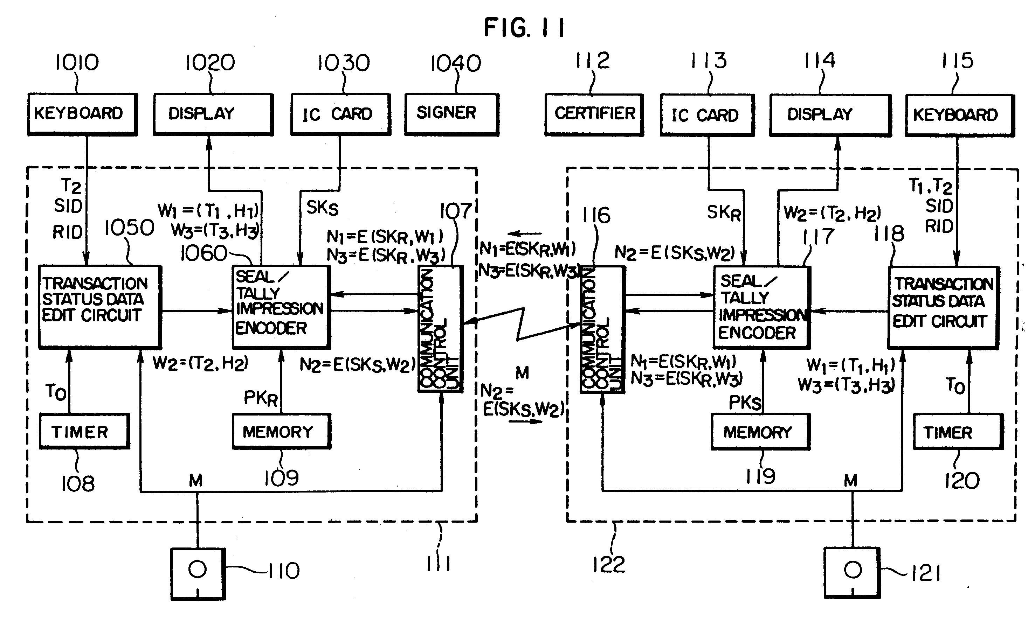

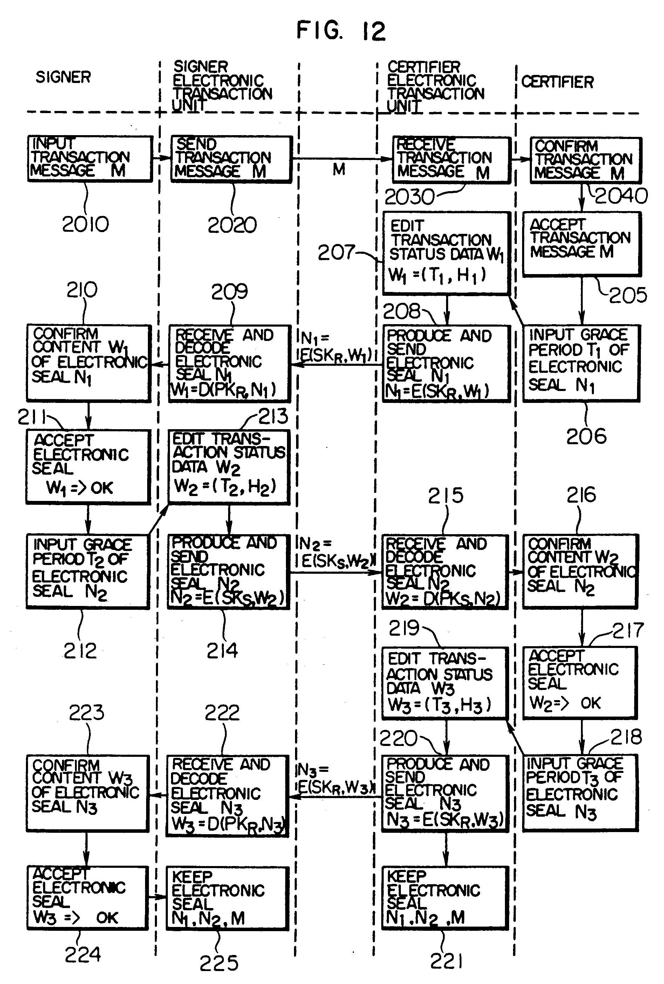

Fig. 11 shows another configuration of the system of the present invention, and Fig. 12 shows a flow chart of a procedure in a fifth embodiment of the present invention in the configuration of Fig. 11. Operations of elements in Fig. 11 are explained with reference to the flow chart of Fig. 12.

Step 2010:

The signer 104 enters the transaction message M from the message file 110 to the signer electronic transaction unit 111.

Step 2020:

The signer electronic transaction unit 111 sends the input transaction message M to the certifier electronic transaction unit 122 by the communication control unit 107.

Step 2030:

The certifier electronic transaction unit 122 receives the transaction message M and displays it on the display 114.

Step 2040:

The certifier 112 confirms the transaction message M displayed on the display 114.

Step 205:

The certifier 112 reviews the content of the transaction message M and accepts to proceed with the transaction.

Step 206:

The certifier 112 enters the grace period $T_1$ of the certifier electronic tally impression $N_1$ and the sender/receiver ID to the certifier electronic transaction unit 122 by the keyboard 115.

Step 207:

The certifier electronic transaction unit 122 edits the input grace period $T_1$, sender/receiver ID, time information $T_0$ generated by the timer 120 and information for identifying the content of the transaction message M through the transaction status data edit circuit 118 to prepare (produce) the transaction status data $W_1 = (T_1, H_1)$.

Step 208:

The certifier electronic transaction unit 122 encodes the transaction status data $W_1$ by the seal/tally impression encoder 117 by using the secret key $SK_R$ of the certifier read from the IC card 113 to prepare (produce) the certifier electronic tally impression $N_1 = E (SK_R, W_1)$,which is sent to the signer electronic transaction unit 111 by the communication control unit 116.

Step 209:

The signer electronic transaction unit 111 decodes the certifier electronic tally impression $N_1$ by the seal/tally impression encoder 1060 by using the public key $PK_R$ of the certifier registered in the memory 109 to prepare the transaction status data $W_1 = D (PK_R, N_1)$,which is displayed on the display 1020.

Step 210:

The signer 1040 confirms the content of the transaction status data $W_1$ displayed on the display 1020 to check on the validity thereof.

Step 211:

The signer 1040 accepts to proceed with the transaction depending on the result of the validity check of the transaction status data $W_1$.

Step 212:

The signer 1040 enters the grace period $T_2$ of the signer electronic seal $N_2$ and the sender/receiver ID to the signer electronic transaction unit 111 by the keyboard 1010.

Step 213:

The signer electronic transaction unit 111 edits the input grace period $T_2$, sender/receiver ID, time information $T_0$ generated by the timer 108 and information for identifying the content of the transaction message M through the transaction status data edit circuit 1050 to prepare the transaction status data $W_2$ = ($T_2$, $H_2$).

Step 214:

The signer electronic transaction unit 111 encodes the transaction status data $W_2$ by the seal/tally impression encoder 1060 by using the secret key $SK_S$ of the signer read from the IC card 1030 to prepare the signer electronic seal $N_2$ = E ($SK_S$, $W_2$), which is sent to the certifier electronic transaction unit 122 by the communication control unit 107.

Step 215:

The certifier electronic transaction unit 122 decodes the signer electronic seal $N_2$ of the seal/tally impression encoder 117 by using the public key $PK_S$ of the certifier registered in the memory 119 to prepare the transaction status data $W_2$ = D ($PK_S$, $N_2$), which is displayed on the display 114.

Step 216:

The certifier 112 confirms the content of the transaction status data $W_2$ displayed on the display 114 to check the validity thereof.

Step 217:

The certifier 112 accepts to proceed with the transaction depending on the result of the validity check of the transaction status data $W_2$.

Step 218:

The certifier 112 enters the grace period $T_3$ of the certifier electronic seal $N_3$ and the sender/receiver ID to the certifier electronic transaction unit 122 by the keyboard 115.

Step 219:

The certifier electronic transaction unit 122 edits the input grace period $T_3$, sender/receiver ID, time information $T_0$ generated by the timer 120 and information for identifying the content of the transaction message M through the transaction status data edit circuit 118 to prepare the transaction status data $W_3$ = ($T_3$, $H_3$).

Step 220:

The certifier electronic transaction unit 122 encodes the transaction status data $W_3$ by the seal/tally impression encoder 117 by using the secret key $SK_R$ of the certifier read from the IC card 113 to prepare the certifier electronic seal $N_3$ = E ($SK_R$, $W_3$), which is sent to the signer electronic transaction unit 111 by the communication control unit 116.

Step 221:

The certifier electronic transaction unit 122 keeps the transaction message M and the electronic seals $N_2$ and $N_3$ of both parties in the message file 121.

Step 222:

The signer electronic transaction unit 111 decodes the certifier electronic seal $N_3$ by the seal/tally impression encoder 1060 by using the public key $PK_R$ of the certifier registered in the memory 109 to prepare the transaction status data $W_3 = D (PK_R, N_3)$, which is displayed on the display 1020.

Step 223:

The signer 1040 confirms the content of the transaction status data $W_3$ displayed on the display 1020 to check the validity thereof.

Step 224:

The signer 1040 accepts to proceed with the transaction depending on the result of the validity check of the transaction status data $W_3$.

Step 225:

The signer electronic transaction unit 111 keeps the transaction message M and electronic seals $N_2$ and $N_3$ of both parties in the message file 110.

In the steps 211, 217 and 224 of the present embodiment, the grace period information indicating the period for permitting interruption of the transaction is included in the electronic seal and tally impression. If the party who received the electronic seal or tally impression lodges an opposition against the received electronic seal or tally impression within the grace period, he/she is ensured to invalidate the electronic seal or tally impression he/she already issued by reporting the termination of the transaction to the public organization by the third party. Thus, a dispute during and after the transaction can be prevented.

If the party who sent the electronic seal or tally impression wishes to terminate the transaction because something wrong was found later, the transaction can be terminated by reporting it to the public organization within the designated grace period. Thus, a wrong transaction is prevented.

The grace period may be sent to any period by the sender of the electronic seal and tally impression while taking the time necessary for the receiver to confirm the content into consideration. Thus, even if there is a difference between the processing speeds of the apparatus for preparing and checking the electronic seals and tally impression of both parties, the system can be flexibly operated. Thus, the safety of the transaction is assured where the apparatus having different performances such as a personal computer and a large scale computer.

In accordance with the present invention, unauthorized act by not only the parties but also the third person is prevented and a highly reliable electronic transaction system is attained.

**Claims**

1. An electronic transaction method for electronically communicating digital signatures concerning a transaction message (M) between a first terminal for a first transacting party and a second terminal for a second transacting party, comprising the steps of

   A. in said first terminal (423) :

   (1) preparing (5070) a first certificate data (h1), by a first certificate data production scheme, for indicating that the transaction message has been informally accepted, said first certificate data being dependent on said transaction message (M) ;

   (2) generating (5080) a first digital signature D (W1, SKr) by encoding data (W1) including at least said first certificate data (h1) by using a secret key (SKr) of the first transacting party, ;

   (3) sending (5080) said first digital signature D (W1, SKr) from said first terminal to said second terminal ;

   characterized in that said step of generating (5080) is carried out based on a public key cryptograph scheme ; and by the further steps of

   B. in said second terminal (404) :

   (1) preparing (5110) a second certificate data (h1, h2), by a second certificate data production scheme, for indicating that the transaction message has been formally accepted, said second certificate data being dependent on said transaction message (M) and distinct from said first certificate data (h1) ;

   (2) generating (5120) a second digital signature D (W2, SKs) by encoding data (W2) including at least said second certificate data (h1, h2) by using a secret key (SKs) of the second transacting party, based on a public key cryptograph scheme ;

(3) sending (5120) said second digital signature D (W2, SKs) from said second terminal to said first terminal ; and

C. in said first terminal (423) :

(1) after receiving of said second digital signature D (W2, SKs) from said second terminal, preparing (5160) a third digital signature D (W2, SKr) by encoding data (W2) including at least said second certificate data (h1, h2) by using the secret key (SKr) of the second transacting party, based on a public key cryptograph scheme ; and

(2) sending (5160) said third digital signature D (W2, SKr) from said first terminal to said second terminal.

2.  An electronic transaction method according to claim 1, characterized in that :

said first certificate data (h1) is a Hash total of said transaction message (M) derived by a first compression-encoding ; and

said second certificate data (h2) is a Hash total of said transaction message derived by a second compression-encoding different from said first one.

3.  An electronic transaction method according to claim 1, characterized in that :

said first certificate data (h1) is a first portion of a Hash total of said transaction message (M) derived by compression-encoding ; and

said second certificate data (h2) is a second portion of the Hash total of said transaction message.

4.  An electronic transaction method according to claim 1, characterized in that :

said first digital signature D (W1, SKr) is generated by encoding data (W1) including said first certificate data (h1) and time data (T).

5.  An electronic transaction method according to claim 4, characterized in that :

said second digital signature D (W2, SKs) Is generated by encoding data (W2) Including said second certificate data (h1, h2) and time data (T) extracted from said first digital signature.

6.  An electronic transaction method according to claim 1, characterized in that :

each of said digital signatures include time data (T) representing a grace period for permitting an opposition to the transaction.

7.  An electronic transaction method according to claim 1, characterized by the steps :

B. in said second terminal (404) :

(1-1) reproducing (5090) the first certificate data (h1') from said first digital signature D (W1, SKr) received from said first terminal by decoding said first digital signature D (W1, SKr) by using a public key (PKr) of the first transacting party, based on the public key cryptograph scheme ; and

(1-2) comparing (5090) said reproduced first certificate data (h1') with a certificate data (h1) prepared by the first certificate data production scheme from the transaction message M held in the second terminal ;

said second digital signature D (W2, SKs) being sent in a case in which said reproduced first certificate data (h1') coincides with said certificate data (h1) prepared in the second terminal.

8.  An electronic transaction method according to claim 1, characterized by the steps :

C. in said first terminal (423) :

(1-1) reproducing (5130) the second certificate data (h1", h2") from said second digital signature D (W2, SKs) received from said second terminal by decoding said second digital signature D (W2, SKs) by using a public key (PKs) of the second transacting party, based on the public key cryptograph scheme ; and

(1-2) comparing (5130) said reproduced second certificate data (h1", h2") with a certificate data (h1, h2) prepared by the second certificate data production scheme from the transact ion message M held in the first terminal ;

said third digital signature D (W2, SKr) being sent in a case in which said reproduced second certificate data (h1", h2") coincides with said certificate data (h1, h2) prepared in the first terminal.

9.  An electronic transaction system for electronically communicating digital signatures concerning a transaction message (M) between two terminals connected through a communication network, each of said terminals comprising:

means (421, 4060) for storing the transaction message (M), a secret key (SKr) of a first transacting party using one of the two terminals, and a public key (PKs) of a second transacting party which communicates with said first transacting party concerning said digital signatures via the other terminal,

means (417, 420) for preparing a first certificate data (h1) to indicate that the transaction message (M) has been informally accepted, said first certificate data being dependent on said transaction message (M), and

means (415) for generating a first digital saignature D (W1, SKr) by encoding data (W1), which includes at least said first certificate data (h1), by using said secret key (SKr),

characterised in that said means (415) for generating uses said secret key based on a public key cryptograph scheme, and

that each of said terminals further comprises:

means (470, 4100) for preparing a second certificate data (h1, h2) to indicate that the transaction message (M) has been formally accepted,

means (412) for generating a second digital signature D (W2, SKr) by encoding data (W2), which includes at least said second certificate data (h1, h2), by using the secret key (SKr) based on said public key cryptograph scheme,

means (415, 412) for reproducing a first certificate data (h1' ) Iron a first digital signature D (W1, SKs) received from said other one of said two terminals by decoding said received first digital signature D (W1, SKs) and for reproducing a second certificate data (h1", h2") from a second digital signature D-(W2, SKs) received from said other one terminal by decoding said second digital signature D (W2, SKs) by using the public key (PKs) read out from said first means based on the public key cryptograph scheme;

means (4157, 416, 412, 4110) for executing a first comparison between raid reproduced first certificate data (h1' ) and said first certificate data (h1) prepared by said preparing means and a second comparison between said reproduced second certificate data (h1", h2") and said second certificate data (h1, h2) prepared by said preparing means ; and

means (414, 413) for selectively sending out said first digital signature D (W1, SKr) and said second digital signature D (W2, SKs) to said other one of the two terminals through said network according to the results of said first and second comparison.

## Patentansprüche

1. Elektronisches Transaktionsverfahren zur elektronischen Übertragung von eine Transaktionsnachricht (M) betreffenden digitalen Unterschriften zwischen einem ersten Terminal für einen ersten Transaktionsteilnehmer und einem zweiten Terminal für einen zweiten Transaktionsteilnehmer, umfassend die folgenden Schritte:

A. in dem ersten Terminal (423):

(1) Vorbereiten (5070) von ersten Zertifikatdaten (h1) nach einem ersten Zertifikatdaten-Erzeugungsschema zur Anzeige, daß die Transaktionsnachricht informell akzeptiert worden ist, wobei die ersten Zertifikatdaten von der Transaktionsnachricht (M) abhängen,

(2) Erzeugen (5080) einer ersten digitalen Unterschrift D(W1, SKr) durch Codieren von Daten (W1) einschließlich mindestens der ersten Zertifikatdaten (h1) unter Verwendung eines Geheimschlüssels (SKr) des ersten Transaktionsteilnehmers, und

(3) Übertragen (5080) der ersten digitalen Unterschrift D(W1, SKr) von dem ersten an den zweiten Terminal,

dadurch gekennzeichnet, daß der Erzerngungsschritt (5080) aufgrund eines Kryptogrammschemas mit öffentlichem Schlüssel durchgeführt wird, sowie ferner durch folgende Schritte:

B. in dem zweiten Terminal (404):

(1) Vorbereiten (5110) von zweiten Zertifikatdaten (h1, h2) nach einem zweiten Zertifikatdaten-Erzeugungsschema zur Anzeige, daß die Transaktionsnachricht formell angenommen worden ist, wobei die zweiten Zertifikatdaten von der Transaktionsnachricht (M) abhängen und von den ersten Zertifikatdaten (h1) verschieden sind,

(2) Erzeugen (5120) einer zweiten digitalen Unterschrift D(W2, SKs) durch Codieren von Daten (W2) einschließlich mindestens der zweiten Zertifikatdaten (h1, h2) unter Verwendung eines Geheimschlüssels (SKs) des zweiten Transaktionsteilnehmers, der auf einem Kryptogrammschema mit öffentlichem Schlüssel beruht,

(3) übertragen (5120) der zweiten digitalen Unterschrift D(W2, SKs) von dem zweiten auf den ersten Terminal, und

C. in dem ersten Terminal (423):

(1) Vorbereiten (5160) einer dritten digitalen Unterschrift D(W2, SKr) durch Codieren von Daten (W2) einschließlich mindestens der zweiten Zertifikatdaten (h1, h2) unter Verwendung des Geheimschlüssels (SKr) des zweiten Transaktionsteilnehmers, der auf einem Kryptogrammschema mit öffentlichem Schlüssel beruht, im Anschluß an den Empfang der zweiten digitalen Unterschrift D(W2, SKs) von dem zweiten Terminal, und

(2) Übertragen (5160) der dritten digitalen Unterschrift D(W2, SKr) von dem ersten auf den zweiten Terminal.

2. Elektronisches Transaktionsverfahren nach Anspruch 1, dadurch gekennzeichnet,

daß die ersten Zertifikatdaten (h1) ein durch eine erste Kompressionscodierung abgeleitetes Hash-Produkt der Transaktionsnachricht (M) sind, und

daß die zweiten Zertifikatdaten (h2) ein durch eine von der ersten unterschiedliche zweite Kompressionscodierung abgeleitetes Hash-Produkt der Transaktionsnachricht sind.

3. Elektronisches Transaktionsverfahren nach Anspruch 1, dadurch gekennzeichnet,

daß die ersten Zertifikatdaten (h1) ein erster Teil eines durch Kompressionscodierung abgeleiteten Hash-Produkts der Transaktionsnachricht (M) sind, und

daß die zweiten Zertifikatdaten (h2) ein zweiter Teil des Hash-Produkts der Transaktionsnachricht sind.

4. Elekronisches Transaktionsverfahren nach Anspruch 1, dadurch gekennzeichnet, daß die erste digitale Unterschrift D(W1, SKr) durch Codieren von Daten (W1) einschließlich der ersten Zertifikatdaten (h1) und einschließlich Zeitdaten (T) erzeugt wird.

5. Elektronisches Transaktionsverfahren nach Anspruch 4, dadurch gekennzeichnet, daß die zweite digitale Unterschrift D(W2, SKs) durch Codieren von Daten (W2) einschließlich der aus der ersten digitalen Unterschrift extrahierten zweiten Zertifikatdaten (h1, h2) und Zeitdaten (T) erzeugt wird.

6. Elektronisches Transaktionsverfahren nach Anspruch 1, dadurch gekennzeichnet, daß jede der digitalen Unterschriften Zeitdaten (T) enthält, die eine verfügbare Periode angeben, innerhalb der gegen die Transaktion Widerspruch eingelegt werden kann.

7. Elektronisches Transaktionsverfahren nach Anspruch 1, gekennzeichnet durch folgende Schritte:

B. in dem zweiten Terminal (404):

(1-1) Reproduzieren (5090) der ersten Zertifikatdaten (h1') aus der von dem ersten Terminal empfangenen ersten digitalen Unterschrift D(W1, SKr) durch Decodieren der ersten digitalen Unterschrift D(W1, SKr) unter Verwendung eines öffentlichen Schlüssels (PKr) des ersten Transaktionsteilnehmers aufgrund des Kryptogrammschemas mit öffentlichen Schlüssel, und

(1-2) Vergleichen (5090) der reproduzierten ersten Zertifikatdaten (h1') mit Zertifikatdaten (h1), die nach dem ersten Zertifikatdaten-Erzeugungsschema aus der in dem zweiten Terminal vorhandenen Transaktionsnachricht (M) erzeugt worden sind,

wobei die zweite digitale Unterschrift D(W2, SKs) übertragen wird, falls die reproduzierten ersten Zertifikatdaten (h1') mit dem in dem zweiten Terminal vorbereiteten zertifikatdaten (h1) übereinstimmen.

8. Elektronisches Transaktionsverfahren nach Anspruch 1, gekennzeichnet durch folgende Schritte:

C. in dem ersten Terminal (423):

(1-1) Reproduzieren (5130) der zweiten Zertifikatdaten (h1", h2") aus der von dem zweiten Terminal empfangenen zweiten ditigalen Unterschrift D(W2, SKs) durch Decodieren der zweiten digitalen Unterschrift D(W2, SKs) unter Verwendung eines öffentlichen Schlüssels (PKs) des zweiten Transaktionsteilnehmers aufgrund des Kryptogrammschemas mit öffentlichen Schlüssel, und

(1-2) Vergleichen (5130) der reproduzierten zweiten Zertifikatdaten (h1", h2") mit Zertifikatdaten (h1, h2), die nach dem zweiten Zertifikatdaten-Erzeugungsschema aus der in dem ersten Terminal vorhandenen Transaktionsnachricht (M) vorbereitet worden sind,

wobei die dritte digitale Unterschrift D(W2, SKr) übertragen wird, falls die reproduzierten zweiten Zertifikatdaten (h1", h2") mit den in dem ersten Terminal vorbereiteten Zertifikatdaten (h1, h2) übereinstimmen.

9. Elektronisches Transaktionssystem zur elektronischen Übertragung von eine Transaktionsnachricht (M) betreffenden digitalen Unterschriften zwischen zwei über ein Nachrichtennetzwerk miteinander verbundenen Terminals, deren jeder umfaßt:

eine Einrichtung (421, 4060) zur Speicherung der Transaktionsnachricht (M), eines Geheimschlüssels (SKr) eines ersten Transaktionsteilnehmers, der einen der beiden Terminals benutzt, und eines öffentlichen Schlüssels (PKs) eines zweiten Transaktionsteilnehmers, der mittels des anderen Terminals mit dem ersten Transaktionsteilnehmer bezüglich der digitalen Unterschriften in Verbindung steht,

eine Einrichtung (417, 420) zur Vorbereitung von ersten Zertifikatdaten (h1) zur Anzeige, daß die Transaktionsnachricht (M) informell akzeptiert worden ist, wobei die ersten Zertifikatdaten von der Transaktionsnachricht (M) abhängen und

eine Einrichtung (415) zur Erzeugung einer ersten digitalen Unterschrift D(W1, SKr) durch Codieren von Daten (W1), die mindestens die ersten Zertifikatdaten (h1) enthalten, unter Verwendung des Geheimschlüssels (SKr),

dadurch gekennzeichnet, daß die Erzeugungseinrichtung (415) den Geheimschlüssel aufgrund eines Kryptogrammschemas mit öffentlichen Schlüssel benutzt, und daß die Terminals ferner umfassen:

eine Einrichtung (420, 4100) zur Erzeugung von zweiten Zertifikatdaten (h1, h2) zur Anzeige, daß die Transaktionsnachricht (M) formell akzeptiert worden ist, wobei die zweiten Zertifikatdaten von der Transaktionsnachricht (M) abhängen und von den ersten Zertifikatdaten (h1) verschieden sind,

eine Einrichtung (412) zur Erzeugung einer zweiten ditigalen Unterschrift D(W2, SKr) durch Codieren von Daten (W2), die mindestens die zweiten Zertifikatdaten (h1, h2) enthalten, unter Verwendung des Geheimschlüssels (SKr), der auf dem Kryptogrammschema mit öffentlichen Schlüssel beruht,

eine Einrichtung (415, 412) zum Reproduzieren von ersten Zertifikatdaten (h1') aus einer von dem anderen Terminal erhaltenen ersten digitalen Unterschrift D(W1, SKs) durch Decodieren der empfangenen ersten digitalen Unterschrift (W1, SKs) und zum Reproduzieren von zweiten Zertifikatdaten (h1", h2") aus einer von dem einen Terminal empfangenen zweiten digitalen Unterschrift D(W2, SKs) durch Decodieren der zweiten digitalen Unterschrift D(W2, SKs) unter Verwendung des von der ersten Einrichtung ausgelesenen öffentlichen Schlüssels (PKs), der auf dem Kryptogrammschema mit öffentlichen Schlüssel beruht,

eine Einrichtung (4157, 416, 412, 4110) zur Durchführung eines ersten Vergleichs zwischen den reproduzierten ersten Zertifikatdaten (h1') und den von der ersten Vorbereitungseinrichtung vorbereiteten ersten Zertifikatdaten (h1) sowie eines zweiten Vergleichs zwischen den reproduzierten zweiten Zertifikatdaten (h1", h2") und den von der Vorbereitungseinrichtung vorbereiteten zweiten Zertifikatdaten (h1, h2), und

eine Einrichtung (414, 413), die entsprechend dem Ergebnis des ersten und des zweiten Vergleichs selektiv die erste digitale Unterschrift D(W1, SKr) und die zweite digitale Unterschrift D(W2, SKs) über das Netzwerk auf den anderen Terminal überträgt.

## Revendications

1. Procédé de transaction électronique pour la communication électronique de signatures numériques concernant un message de transaction (M) entre un premier terminal pour un premier partenaire de transaction et un second terminal pour un second partenaire de transaction, comprenant les étapes consistant à

A. dans ledit premier terminal (423) :

(1) préparer (5070) une première donnée de certification (h1) par un premier système de production de données de certification, pour indiquer que le message de transaction a été accepté de façon informelle, ladite première donnée d'identification dépendant dudit message de transaction (M);

(2) produire (5080) une première signature numérique D(W1, SKr) par codage de données (W1) comprenant au moins ladite première donnée de certification (h1) moyennant l'utilisation d'un code secret (SKr) du premier partenaire de transaction ;

(3) envoyer (5080) ladite première signature numérique D (W1, SKr) dudit premier terminal audit second terminal;

caractérisé en ce que ladite étape de production (5080) est exécutée sur la base d'un système de cryptographie à code public; et par les étapes supplémentaies consistant à

B. dans ledit second terminal (404):

(1) préparer (5110) une seconde donnée de certification (h1,h2), par un second système de production de données de certification, pour indiquer que le message de transaction a été accepté formellement, ladite seconde donnée de certification dépendant dudit message de transaction (M) et étant distincte de ladite première donnée de certification (h1);

(2) produire (5120) une seconde signature numérique D (W2, SKs) par codage de données (W2) comprenant au moins ladite seconde donnée de certification (h1, h2) moyennant l'utilisation d'un code secret (SKs) du second partenaire de transaction, sur la base d'un système de cryptographie à code public;

(3) envoyer (5120) ladite seconde signature numérique D (W2, SKs) par ledit second terminal audit premier terminal; et

C. dans ledit premier terminal (423) :

(1) après réception de ladite seconde signature numérique D (W2, SKs) de la part du second terminal, préparer (5160) une troisième signature numérique D(W2,SKr) par codage de données (W2) incluant au moins ladite seconde donnée de certification (h1,h2) moyennant l'utilisation du code secret (SKr) du second partenaire de transaction, sur la base d'un système de cryptographie à code public; et

(2) envoyer (5160) ladite troisième signature numérique D (W2, SKr) dudit premier terminal audit second terminal.

2. Procédé de transaction électronique selon la revendication 1, caractérisé en ce que :

ladite première donnée de certification (h1) est un total de contrôle dudit message de transaction (M) obtenu par un premier codage à compression; et

ladite seconde donnée de certification (h2) est un total de contrôle dudit message de transaction obtenu par un second codage à compression, différent du premier.

3. Procédé de transaction électronique selon la revendication 1, caractérisé en ce que :

ladite première donnée de certification (h1) est une première partie d'un total de contrôle dudit message de transaction (M) obtenu par codage à compression; et

ladite seconde donnée de certification (h2) est une seconde partie du total de contrôle dudit message de transaction.

4. Procédé de transaction électronique selon la revendication 1, caractérisé en ce que :

ladite première signature numérique D (W1, SKr) est produite par codage de données (W1) incluant ladite première donnée de certification (h1) et une donnée de temps (T).

5. Procédé de transaction électronique selon la revendication 4, caractérisé en ce que :

ladite seconde signature numérique D (W2, SKs) est produite par codage de données (W2) incluant ladite seconde donnée de certification (h1,h2) et une donnée de temps (T) extraite de ladite première signature numérique.

6. Procédé de transaction électronique selon la revendication 1, caractérisé en ce que :

chacune desdites signatures numériques inclut une donnée de temps (T) représentant un délai de grâce pour permettre une opposition à la transaction.

7. Procédé de transaction électronique selon la revendication 1, caractérisé par les étapes consistant à :

B. dans ledit second terminal (404) :

(1-1) lire (5090) la première donnée de certification (h1') à partir de ladite première signature numérique D (W1,SKr) reçue dudit premier terminal par décodage de ladite première signature numérique D (W1, SKr) moyennant l'utilisation d'un code public (PKr) du premier partenaire de transaction, sur la base du système de cryptographie à code public; et

(1-2) comparer (5090) ladite première donnée de certification lue (h1') à une donnée de certification (h1) préparée par le premier système de production de données de certification à partir du message de transaction M conservé dans le second terminal;

ladite seconde signature numérique D (W2, SKs) étant envoyée dans un cas dans lequel ladite première donnée de certification lue (h1') coïncide avec ladite donnée de certification (h1) préparée

EP 0 214 609 B1

dans le second terminal.

**8.** Procédé de transaction électronique selon la revendication 1, caractérisé par les étapes consistant à :
C. dans ledit premier terminal (423) :

(1-1) lire (5130) la seconde donnée de certification (h1", h2") à partir de ladite seconde signature numérique D (W2, SKs) reçue en provenance dudit second terminal par décodage de ladite seconde signature numérique D (W2, SKs) moyennant l'utilisation d'un code public (PKs) du second partenaire de transaction, sur la base du système de cryptographie à code public; et

(1-2) comparer (5130) ladite seconde donnée de certification lue (h1", h2") à une donnée de certification (h1,h2) préparée par le second système de production de données de certification à partir du message de transaction (M) retenu dans le premier terminal;

ladite troisième signature numérique D (W2, Skr) étant émise dans le cas où ladite seconde donnée de certification lue (h1", h2") coïncide avec ladite donnée de certification (h1, h2) préparée dans le premier terminal.

**9.** Système de transaction électronique pour la communication électronique de signatures numériques concernant un message de transaction (M) entre deux terminaux raccordés par l'intermédiaire d'un réseau de communication, chacun desdits terminaux comprenant:

des moyens (421,4060) pour mémoriser le message de transaction (M), un code secret (SKr) d'un premier partenaire de transaction utilisant l'un des deux terminaux, et un code public (PKs) d'un second partenaire de transaction, qui communique avec ledit premier partenaire de transaction des données concernant lesdites signatures par l'intermédiaire de l'autre terminal,

des moyens (417,420) pour préparer une première donnée de certification (h1) pour indiquer que le message de transaction (M) a été accepté de façon informelle, ladite première donnée de certification dépendant dudit message de transaction (M), et

des moyens (415) pour produire une première signature numérique D (W1, SKr) par codage de données (W1), qui incluent au moins ladite première donnée de certification (h1), moyennant l'utilisation dudit code secret (SKr),

caractérisé en ce que lesdits moyens de production (415) utilisent ledit code secret sur la base d'un système de cryptographie à code public, et

que chacun desdits terminaux comprend en outre:

des moyens (470,4100) pour préparer une seconde donnée de certification (h1,h2) pour indiquer que le message de transaction (M) a été accepté de façon formelle,

des moyens (412) pour produire une seconde signature numérique D (W2, SKr) par codage de données (W2), qui incluent au moins ladite seconde donnée de certification (h1,h2), moyennant l'utilisation du code secret (SKr) sur la base dudit système de cryptographie à code public,

des moyens (415,412) pour lire une première donnée de certification (h1') à partir d'une première signature numérique D (W1,SKs) reçue à partir dudit autre desdits deux terminaux par décodage de ladite première signature numérique reçue D (W1,SKs) et lire une seconde donnée de certification (h1",h2") à partir d'une seconde signature numérique D (W2, SKs) reçue de la part dudit autre terminal par décodage de ladite seconde signature numérique D (W2, SKs) moyennant l'utilisation du code public (PKs) lu à partir desdits premiers moyens sur la base du système de cryptographie à code public;

des moyens (4157,416,412,4110) pour exécuter une première comparaison entre ladite première donnée de certification lue (h1') et ladite première donnée de certification (h1) préparée par lesdits moyens de préparation et une seconde comparaison entre ladite seconde donnée de certification lue (h1", h2") et ladite seconde donnée de certification (h1,h2) préparée par lesdits moyens de préparation, et

des moyens (414,413) pour émettre de façon sélective ladite première signature numérique D (W1, SKr) et ladite seconde signature numérique D (W2, SKs) en direction dudit autre des deux terminaux par l'intermédiaire dudit réseau en fonction des résultats desdites première et seconde comparaisons.

28

FIG. 1 PRIOR ART

## FIG. 2 A  PRIOR ART

I1

BLOCK ENCODER EK — 21 ← SECRET KEY K

22

In, ⋯, I3, I2        O1, O2, ⋯, On-1

⊕

EXCLUSIVE OR

On

## FIG. 3  PRIOR ART

LOG — 37

NOTARY — 31

MESSAGE | SIGNA-TURE | DATE — 32

MESSAGE | SIGNA-TURE — 35

CONFIRM

MESSAGE | SIGNA-TURE | DATE — 36

SENDER — 34

RECEIVER — 33

# FIG. 2 B PRIOR ART

EP 0 214 609 B1

FIG. 4   PRIOR ART

EP 0 214 609 B1

# FIG. 5

INTERMEDIATION TERMINAL ~406

INTERMEDIATION TERMINAL SECRET KEY B

404~ SIGNER TERMINAL

CERTIFIER TERMINAL ~407

CERTIFIER PUBLIC KEY PKS

SIGNER PUBLIC KEY PKR

SIGNER SECRET KEY SKS

CERTIFIER SECRET KEY SKR

403 SIGNER FILE

401 SIGNER

409 CERTIFIER

411 CERTIFIER FILE

EP 0 214 609 B1

FIG. 6

| SIGNER | SIGNER TERMINAL | INTERMEDIATION TERMINAL | CERTIFIER TERMINAL | CERTIFIER |
|---|---|---|---|---|

PRODUCE CONTRACT I → SEND I → RECORD I → PREPARE FOR CERTIFICATION ← INPUT ACCEPT

601  602  602(a)  603  604

GENERATE CERTIFICATE DATA

M [ DATE ] — 605

606

COMPLEMENTARY CONDITION (VERIFY CERTIFIER)

DECODE CERTIFICATE DATA
T + ♀ PUBLIC KEY PKR

M [ VERIFY DATE | DATE | VERIFY DATE ]

609  ← OPEN T TO PERSONS CONCERNED ← DECODE CERTIFICATE DATA
M + ♀ SECRET KEY SKR

T [ ]

608  607

INPUT SECRET KEY RSKR

610  611  613  614

INPUT SECRET KEY SKS → ENCODE CERTIFICATE DATA
M + ♀ SECRET KEY SKS

V [ ]

DATA COMPRESSION

(V, I) + SECRET KEY B + COMPRESSION

W [ ]

OPEN V, W

DECODE CERTIFICATE DATA
V + ♀ PUBLIC KEY PKS

M' [ DATE ]

618  SEND V → COMPARE M WITH M'  617

612  616  615

KEEP T, V, W, I ← T, V, W → KEEP T, V, W, I

EP 0 214 609 B1

## FIG. 7

SIGNER | SIGNER TERMINAL | INTERMEDIATION TERMINAL | CERTIFIER TERMINAL | CERTIFIER

PRODUCE TRANSACTION MESSAGE INPUT SECRET KEY SKS
501

ENCODE TRANSACTION MESSAGE K
$I \rightarrow EK(I)$
502

$EK(I)$

DECODE TRANSACTION MESSAGE K
$EK(I) \rightarrow I$
503

INPUT SECRET KEY SKR

INPUT ID
T
TIME
505

504

508
$D(T, SKR)$

507

ENCODE $D(T, SKR)$
$T'=E(D(T, SKR), PKR)$
OK IF T' IS OF PREDETERMINED FORM

509
SEAL ACCEPT BUTTON

START INTERMEDIATION TERMINAL

DECODE ID
$D(T, SKR)$
$D(T, SKR)$
506

PREPARE CERTIFICATE DATE W
$W=(T, C(IO, I))$
510

PRODUCE ELECTRONIC SEAL
$D(W, SKS)$
511

512
RECORD $D(W, SKS)$

$D(W, SKS)$

513
CHECK ELECTRONIC SEAL CHECK OK IF
$W'=E(D(W, SKS), PKS)$,
$W'=(T', C(IO, I'))$
$\{C(IO, I')=C(IO, I)$
$\{T' = T$

514
SEAL ACCEPT BUTTON

$D(W, SKS)$

517
CHECK ELECTRONIC SEAL CHECK OK IF
$W''=E(D(W, SKR), PKR)$
$W''=(T'', C(IO, I''))$
$W''=W$

516
RECORD $D(W, SKR)$

515
PRODUCE ELECTRONIC SEAL
$D(W, SKR)$

$D(W, SKS)$

518
ERASE $D(W, SKS)$, $D(W, SKR)$

$D(W, SKR)$

521
KEEP FILE

519
COPY I, $D(W, SKS)$, $D(W, SKR)$ INTO FILE

520
COPY I, $D(W, SKS)$, $D(W, SKR)$ INTO FILE

522
KEEP FILE

# FIG. 8

| SIGNER | SIGNER TERMINAL | CERTIFIER TERMINAL | CERTIFIER |
|---|---|---|---|

PRODUCE TRANSACTION MESSAGE INPUT SECRET KEY $SK_S$

ENCODE TRANSACTION MESSAGE K $I \leftarrow EK(I)$

DECODE TRANSACTION MESSAGE K $EK(I) \rightarrow I$

INPUT SECRET KEY $SK_R$ TRANSACTION ACCEPT BUTTON

501    502    503    504

INPUT ID

$T$: TIME

505

504

SEAL ACCEPT BUTTON

ENCODE $D(T, SK_R)$ $T' = E(D(T, SK_R), PK_R)$ OK IF $T'$ IS OF PREDETERMINED FORM

$D(T, SK_R)$

DECODE ID $D(T, SK_R)$

506

509    508

HASH TOTAL

$C(IO, I)$    510

PRODUCE CERTIFICATE DATA $W = (V, T, C(IO, I))$

711

712    514

CHECK ELECTRONIC SEAL $W' = E(D(W, SK_S), PK_S)$ $W' = (V', T', C(IO, I))$ OK IF $\begin{cases} V' \text{ IS OF PREDETERMINED FORM} \\ C(IO, I') = C(IO, I) \\ T' = T \end{cases}$

SEAL ACCEPT BUTTON

PRODUCE ELECTRONIC SEAL $D(W, SK_S)$

$D(W, SK_S)$

511

713

CHECK ELECTRONIC SEAL $W'' = E(D(W, SK_R), PK_R)$ $W'' = (V'', T'', C(IO, I''))$ CHECK OK IF $W'' = W$

$D(W, SK_R)$

PRODUCE ELECTRONIC SEAL $D(W, SK_R)$

515

521    519    520    522

KEEP IN FILE

COPY $I, D(W, SK_S)$, $D(S, SK_R)$ IN FILE

COPY $I, D(W, SK_S)$, $D(W, SK_R)$ IN FILE

KEEP IN FILE

FIG. 9

# FIG. 10

| SIGNER | SIGNER TERMINAL | CERTIFIER TERMINAL | CERTIFIER |
|---|---|---|---|

**5010**
PRODUCE TRANSACTION MESSAGE M INPUT SECRET KEY $SK_S$

**5020**
ENCODE M
K
$M \rightarrow EK(M)$

**5040**
DECODE EK(M)
K
$EK(M) \rightarrow M$

**5050**
INPUT SECRET KEY $SK_R$ TRANSACTION ACCEPT BUTTON

**5030**
COMPRESSION- DECODE M
$M \rightarrow H(M) = (h1, h2)$

**5060**
COMPRESSION- DECODE M
$M \rightarrow H(M) = (h1, h2)$
INPUT ID
T : TIME

**5100**
SEAL ACCEPT BUTTON

**5090**
CHECK ELECTRONIC SEAL
$W1' = E(D(W1, SK_R), PK_R)$
$W1' = (T', h1')$,
CHECK OK IF $T'$ IS OF PREDETERMINED FORMAT AND $h1' = h1$

**5070**
PRODUCE TALLY IMPRESSION CERTIFICATE DATA $W1 = (T, h1)$

**5080**
PRODUCE ELECTRONIC TALLY IMPRESSION
$W1 \rightarrow D(W1, SK_R)$

**5110**
PRODUCE SEAL CERTIFI- CATE DATA
$W2 = (T', h1, h2)$

**5130**
CHECK ELECTRONIC SEAL
$W2'' = E(D(W2, SK_S), PK_S)$
$W2'' = (T'', h1'', h2'')$
CHECK OK IF
$T'' = T'$ AND
$(h1'', h2'') = (h1, h2)$

**5140**
SEAL ACCEPT BUTTON

**5120**
PRODUCE ELECTRONIC SEAL
$W2 \rightarrow D(W2, SK_S)$

**5170**
CHECK ELECTRONIC SEAL
$W2'' = E(D(W2, SK_R), PK_R)$
$W2'' = (T'', h1'', h2'')$
CHECK OK IF
$T'' = T'$ AND
$(h1'', h2'') = (h1, h2)$

**5150**
PRODUCE SEAL CERTIFI- CATE DATA
$W2 = (T, h1, h2)$

**5160**
PRODUCE ELECTRONIC SEAL
$W2 \rightarrow D(W2, SK_R)$

**5190**
KEEP FILE

**5180**
RESERVE TRANSACTION MESSAGE AND ELECTRONIC SEAL

**5200**
RESERVE TRANSACTION MESSAGE AND ELECTRONIC SEAL

**5210**
KEEP FILE

# FIG. 11

EP 0 214 609 B1

# FIG. 12

| SIGNER | SIGNER ELECTRONIC TRANSACTION UNIT | | CERTIFIER ELECTRONIC TRANSACTION UNIT | CERTIFIER |
|---|---|---|---|---|

INPUT TRANSACTION MESSAGE M

2010

SEND TRANSACTION MESSAGE M

2020

M

RECEIVE TRANSACTION MESSAGE M

2030

CONFIRM TRANSACTION MESSAGE M

2040

EDIT TRANSACTION STATUS DATA $W_1$

$W_1 = (T_1, H_1)$

207

208

ACCEPT TRANSACTION MESSAGE M

205

210

209

CONFIRM CONTENT $W_1$ OF ELECTRONIC SEAL $N_1$

RECEIVE AND DECODE ELECTRONIC SEAL $N_1$

$W_1 = D(PK_R, N_1)$

$N_1 = E(SK_R, W_1)$

PRODUCE AND SEND ELECTRONIC SEAL $N_1$

$N_1 = E(SK_R, W_1)$

INPUT GRACE PERIOD $T_1$ OF ELECTRONIC SEAL $N_1$

206

211

ACCEPT ELECTRONIC SEAL

$W_1 \Rightarrow OK$

213

EDIT TRANS-ACTION STATUS DATA $W_2$

$W_2 = (T_2, H_2)$

215

216

INPUT GRACE PERIOD $T_2$ OF ELECTRONIC SEAL $N_2$

212

PRODUCE AND SEND ELECTRONIC SEAL $N_2$

$N_2 = E(SK_S, W_2)$

214

$N_2 = E(SK_S, W_2)$

RECEIVE AND DECODE ELECTRONIC SEAL $N_2$

$W_2 = D(PK_S, N_2)$

CONFIRM CONTENT $W_2$ OF ELECTRONIC SEAL $N_2$

219

EDIT TRANS-ACTION STATUS DATA $W_3$

$W_3 = (T_3, H_3)$

217

ACCEPT ELECTRONIC SEAL

$W_2 \Rightarrow OK$

220

218

223

222

CONFIRM CONTENT $W_3$ OF ELECTRONIC SEAL $N_3$

RECEIVE AND DECODE ELECTRONIC SEAL $N_3$

$W_3 = D(PK_R, N_3)$

$N_3 = E(SK_R, W_3)$

PRODUCE AND SEND ELECTRONIC SEAL $N_3$

$N_3 = E(SK_R, W_3)$

INPUT GRACE PERIOD $T_3$ OF ELECTRONIC SEAL $N_3$

ACCEPT ELECTRONIC SEAL

$W_3 \Rightarrow OK$

224

KEEP ELECTRONIC SEAL $N_1, N_2, M$

225

KEEP ELECTRONIC SEAL $N_1, N_2, M$

221